# EUROPEAN PATENT APPLICATION

(11) **EP 4 518 297 A1**
(43) Date of publication of application: **05.03.2025**
(21) Application number: 23819259.5
(22) Date of filing: 09.06.2023
(51) Int. Cl.: H04M 1/02, F16C 11/04

(54) **FOLDING APPARATUS AND TERMINAL DEVICE**

(30) Priority: 10.06.2022 CN 202210658366; 25.08.2022 CN 202211025134
(71) Applicant: Huawei Technologies Co., Ltd., Shenzhen, Guangdong 518129 (CN)
(72) Inventor: LIAO, Changliang, Shenzhen, Guangdong 518129 (CN); JIANG, Wenjie, Shenzhen, Guangdong 518129 (CN); LUO, Yufeng, Shenzhen, Guangdong 518129 (CN); WANG, Haiyang, Shenzhen, Guangdong 518129 (CN); ZHAO, Guanyu, Shenzhen, Guangdong 518129 (CN); ZHAO, Huan, Shenzhen, Guangdong 518129 (CN)
(74) Representative: Isarpatent
(86) International application number: PCT/CN2023/099355
(87) International publication number: WO 2023/237096

(57) **Abstract**

A foldable apparatus (10) and a terminal device (100) are provided. The foldable apparatus (10) includes a first middle frame (1), a second middle frame (2), and a foldable structure (3). The foldable structure (3) includes a support plate mechanism (31), a hinge mechanism (32), and a stroke control mechanism (33). The hinge mechanism (32) includes a fastening component (321), a drive connecting rod (322), and a drive sliding block (323). The fastening component (321) is fastened to the first middle frame (1). A first end of the drive connecting rod (322) is mounted on the fastening component (321) and rotatable around a second axis (L2). The drive sliding block (323) is mounted at a second end of the drive connecting rod (322) and rotatable around a third axis (L3). The support plate mechanism (31) is mounted on the fastening component (321) and rotatable around a first axis (L1), and the support plate mechanism (31) is movable in a first direction to slidably fit the second middle frame (2). The drive sliding block (323) is movable in the first direction to slidably fit the support plate mechanism (31). The stroke control mechanism (33) is mounted on the drive sliding block (323) and rotatable around a fourth axis (L4), and the stroke control mechanism (33) is in transmission connection between the support plate mechanism (31) and the second middle frame (2). In this way, flatness of a flexible display in an asymmetric folding process of the terminal device (100) can be implemented.

## Description

### CROSS-REFERENCE TO RELATED APPLICATIONS

This application claims priority to Chinese Patent Application No. 202210658366.2, filed with the China National Intellectual Property Administration on June 10, 2022 and entitled "FOLDABLE APPARATUS AND TERMINAL DEVICE", and to Chinese Patent Application No. 202211025134.X, filed with the China National Intellectual Property Administration on August 25, 2022 and entitled "FOLDABLE APPARATUS AND TERMINAL DEVICE", both of which are incorporated herein by reference in their entireties.

### TECHNICAL FIELD

This application relates to the field of mobile terminal technologies, and in particular, to a foldable apparatus and a terminal device.

### BACKGROUND

To adapt to different use scenarios, a mode switching manner of a display of a foldable terminal product (for example, an electronic device like a foldable mobile phone, a foldable tablet computer, or a foldable computer) becomes a mainstream research direction.

Usually, in a flexible foldable terminal product, a flexible foldable display is folded and unfolded via a hinge structure. Due to impact of a thickness of the hinge structure, in unfolding and folding processes of the flexible foldable display, motion of a mechanism used by the hinge structure to carry the flexible foldable display does not match motion of the flexible foldable display. As a result, the flexible foldable display is prone to a wrinkle in a process from folding to unfolding, and display performance is affected. Currently, a symmetric folding solution is commonly used for the flexible foldable terminal product, and the product has high costs and a heavy weight.

### SUMMARY

This application provides a foldable apparatus and a terminal device, to implement asymmetric folding of the terminal device, and ensure flatness of a flexible display in folding and unfolding processes.

According to a first aspect, this application provides a foldable apparatus. The foldable apparatus may be used in a terminal device having a flexible display, to support unfolding and folding of the flexible display. The foldable apparatus includes a first middle frame, a second middle frame, and a foldable structure disposed between the first middle frame and the second middle frame. The first middle frame and the second middle frame may support the flexible display, and the foldable structure may implement folding and unfolding between the first middle frame and the second middle frame. The first middle frame and the second middle frame are configured to carry the flexible display of the terminal device. To ensure flatness of the flexible display in folding and unfolding processes, the foldable apparatus rotates and moves with the second middle frame relative to the first middle frame. A quantity of foldable structures is not limited, and may be set as required. Specifically, the foldable structure includes a support plate mechanism, a hinge mechanism, and a stroke control mechanism. The hinge mechanism includes a fastening component, a drive connecting rod, and a drive sliding block. The fastening component is fastened to the first middle frame. When the second middle frame is folded relative to the first middle frame, the fastening component may be fastened relative to the first middle frame, and the fastening component may be considered as a motion reference of the entire structure. A first end of the drive connecting rod is mounted on the fastening component and rotatable around a second axis, that is, the first end of the drive connecting rod is rotatable around the second axis relative to the fastening component. The drive sliding block is mounted at a second end of the drive connecting rod and rotatable around a third axis, that is, the drive sliding block is rotatable around the third axis relative to the drive connecting rod. The support plate mechanism is mounted on the fastening component and rotatable around a first axis, and the support plate mechanism is movable in a first direction to slidably fit the second middle frame. In other words, the support plate mechanism is rotatable around the first axis relative to the fastening component, and the support plate mechanism is slidable in the first direction relative to the second middle frame. The first axis, the second axis, and the third axis are parallel to each other and not collinear, and the first direction is perpendicular to the first axis. The drive sliding block is movable in the first direction to slidably fit the support plate mechanism, that is, the drive sliding block is slidable in the first direction relative to the support plate mechanism. The stroke control mechanism is mounted on the drive sliding block and rotatable around a fourth axis, the stroke control mechanism is in transmission connection between the support plate mechanism and the second middle frame, and the fourth axis is perpendicular to the first axis. In other words, the stroke control structure is rotatable around the fourth axis relative to the drive sliding block, and in a rotation process of the stroke control mechanism, power transmission is implemented between the support plate mechanism and the second middle frame. Specifically, when the support plate mechanism rotates around the first axis relative to the first middle frame, the drive sliding block moves in the first direction relative to the support plate mechanism to generate first displacement, and the stroke control mechanism moves with the drive sliding block relative to the support plate mechanism, and further drives the second middle frame to move in the first direction relative to the support plate mechanism to generate second displacement, where the second displacement is greater than the first displacement. In the unfolding and folding processes of the foldable apparatus, the second middle frame may be driven to rotate and move relative to the first middle frame, so that the second middle frame can meet a carrying requirement of the flexible display in the unfolding and folding processes, thereby preventing a wrinkle from being generated when the flexible display is unfolded. A structure in which the foldable apparatus drives the second middle frame to rotate and move is an asymmetric structure, so that material costs can be reduced.

In a possible implementation, the fastening component includes a connecting rod base and a fastening shaft. A first end of the fastening shaft is fastened to the first middle frame, and a second end of the fastening shaft may be fastened to the connecting rod base via a pin. An axis of the fastening shaft is collinear with the first axis, the support plate mechanism is rotatably connected to the fastening shaft, and the drive connecting rod is mounted on the connecting rod base and rotatable around the second axis.

A first stop hole is disposed on the connecting rod base, a second stop hole is disposed on the fastening shaft, and the first stop hole and the second stop hole are connected via a stop pin, to fasten the fastening shaft to the connecting rod base.

Specifically, a damping component is disposed between the support plate mechanism and the fastening component. The damping component includes a damping spring and a damping sliding block. The damping sliding block is clamped to the support plate mechanism and movable in an extension direction of the first axis, that is, the damping sliding block is movable relative to the support plate mechanism in the extension direction of the first axis. The damping sliding block and the fastening component are cam-fitted; and when the damping sliding block rotates around the first axis, the damping sliding block is movable in the extension direction of the first axis. The damping spring is disposed between the damping sliding block and the fastening component. When the damping sliding block moves in the extension direction of the first axis and compresses the damping spring, the damping spring generates elastic potential energy, to provide restoring force for the damping sliding block.

A cam surface is disposed on the damping sliding block, and a wave-shaped surface is correspondingly disposed on the fastening component. The cam surface abuts against the wave-shaped surface, so that the damping sliding block and the fastening component are cam-fitted.

To implement sliding fit between the damping sliding block and the support plate mechanism, a protrusion part is disposed on the damping sliding block, and a groove part parallel to the first axis is disposed on the support plate mechanism, where the protrusion part slidably fits the groove part.

In another possible implementation, the fastening component includes a connection substrate, a connection plate, and a first connection rotating shaft, and the connection substrate is located between the first middle frame and the second middle frame. The connection plate is fastened to the first middle frame and is fastened to the first connection rotating shaft, and the drive connecting rod is mounted on the connection plate and rotatable around the second axis. The first connection rotating shaft is mounted on the connection substrate and rotatable around a fifth axis, and the fifth axis is parallel to the first axis. The support plate mechanism has a second connection rotating shaft, and the second connection rotating shaft is rotatably connected to the connection substrate and rotatable around the first axis. Herein, the connection plate and the first connection rotating shaft are fastened relative to the first middle frame, and the connection substrate is rotatable around the fifth axis relative to the first connection rotating shaft. In this case, when the support plate mechanism rotates around the first axis, a position of the first axis changes relative to the first middle frame, to change a form of the connection substrate between the first middle frame and the second middle frame, so that the foldable apparatus in an unfolded state has a small thickness.

Specifically, the first connection rotating shaft and the second connection rotating shaft are disposed side by side in the first direction, a first meshing tooth is disposed on an outer periphery that is of the first connection rotating shaft and that faces the second connection rotating shaft, a second meshing tooth is disposed on an outer peripheral surface that is of the second connection rotating shaft and that faces the first connection rotating shaft, and the first meshing tooth is meshed with the second meshing tooth. Meshing transmission can be implemented between the first connection rotating shaft and the second connection rotating shaft, so that the first connection rotating shaft and the second connection rotating shaft simultaneously rotate reversely.

A first damping unit is disposed between the first connection rotating shaft and the connection substrate, and a second damping unit is disposed between the second connection rotating shaft and the connection substrate. The first damping unit includes a first spring and a first sliding block, the first sliding block is mounted on the connection substrate and movable in an extension direction of the fifth axis, and the first sliding block and the first connection rotating shaft are cam-fitted. When the first connection rotating shaft rotates around the fifth axis, the first sliding block is movable in the extension direction of the fifth axis. The first spring is disposed between the first sliding block and the connection substrate, to provide restoring force for the first sliding block when the first sliding block moves in the extension direction of the fifth axis and compresses the first spring. Similarly, the second damping unit includes a second spring and a second sliding block, the second sliding block is mounted on the connection substrate and movable in an extension direction of the first axis, and the second sliding block and the second connection rotating shaft are cam-fitted. When the second connection rotating shaft rotates around the first axis, the second sliding block is movable in the extension direction of the first axis. The second spring is disposed between the second sliding block and the connection substrate, to provide restoring force for the second sliding block when the second sliding block moves in the extension direction of the first axis and compresses the second spring.

Because the first connection rotating shaft and the second connection rotating shaft can simultaneously rotate reversely, the first sliding block and the second sliding block may be disposed in an integrated structure. The first spring and the second spring may be fastened to the connection substrate via a same fastening member.

To improve rotation stability, the connection plate may be connected to two first connection rotating shafts. In the extension direction of the first axis, the two first connection rotating shafts are symmetrical with each other relative to the connection plate.

Possibly, a first central shaft and a second central shaft that are fastened to the connection substrate are further included, where an axis of the first central shaft is collinear with the fifth axis, and an axis of the second central shaft is collinear with the first axis. The first connection rotating shaft and the first central shaft may be rotatably fitted around the fifth axis, and the second connection rotating shaft is rotatable around the first axis to rotatably fit the second central shaft.

In a possible implementation, at least one first pin hole is disposed on the fastening component, and an axis of any first pin hole is collinear with the second axis. At least one second pin hole is disposed at the first end of the drive connecting rod, and the at least one first pin hole is connected to the at least one second pin hole via a first pin shaft, to implement hinging between the drive connecting rod and the fastening component. When a plurality of first pin holes and second pin holes are disposed, motion stability of the structure can be improved.

In a possible implementation, at least one second pin shaft is disposed at the second end of the drive connecting rod, and an axis of any second pin shaft is collinear with the third axis. At least one third pin hole is disposed on the drive sliding block, and the at least one second pin shaft rotatably fits the at least one third pin hole, to implement hinging between the drive sliding block and the drive connecting rod. When a plurality of second pin shafts and third pin holes are disposed, the motion stability of the structure can be improved.

The support plate mechanism includes a first support plate and a second support plate, the first support plate is mounted on the fastening component and rotatable around the first axis, the second support plate is fastened to the first support plate, and when the first support plate rotates around the first axis relative to the fastening component, the second support plate also rotates accordingly. A drive sliding groove that slidably fits the drive sliding block is disposed on the first support plate, and the drive sliding block is slidable in the first direction in the drive sliding groove. A middle frame sliding groove that slidably fits the second middle frame is disposed on the first support plate. A middle frame sliding block that slidably fits the middle frame sliding groove may be correspondingly disposed on the second middle frame, and the middle frame sliding block is slidable in the first direction in the middle frame sliding groove.

In a possible implementation, the stroke control mechanism includes a stroke amplification gear, the stroke amplification gear is mounted on the drive sliding block and rotatable around the fourth axis, and an axis of the stroke amplification gear is collinear with the second axis. A first transmission end and a second transmission end are disposed opposite to each other at an edge of the stroke amplification gear, that is, the first transmission end and the second transmission end are symmetrical with each other relative to the axis of the stroke amplification gear in a direction of the axis of the stroke amplification gear. The first transmission end is configured to be in transmission connection to the support plate mechanism, and the second transmission end is configured to be in transmission connection to the second middle frame. A distance between the first transmission end and the fourth axis is less than a distance between the second transmission end and the fourth axis. When the stroke amplification gear rotates around the fourth axis, the first transmission end and the second transmission end rotate around the fourth axis accordingly, and the first transmission end and the second transmission end generate different linear speeds, so that the first displacement generated when the drive sliding block moves relative to the support plate mechanism is amplified to the second displacement generated when the second middle frame moves relative to the support plate mechanism.

Possibly, the first transmission end is a first tooth part, and the second transmission end is a first sliding rod. Specifically, a first rack is disposed on the support plate mechanism, and the first tooth part is meshed with the first rack. A first sliding groove is disposed on the second middle frame, and the first sliding rod slidably fits the first sliding groove.

Possibly, the first transmission end is a second tooth part, and the second transmission end is a third tooth part. Specifically, a second rack is disposed on the support plate mechanism, and the second tooth part is meshed with the second rack. A third rack is disposed on the second middle frame, and the third tooth part is meshed with the third rack.

Possibly, the first transmission end is a second sliding groove, and the second transmission end is a fourth tooth part. Specifically, a second sliding rod is disposed on the support plate mechanism, and the second sliding rod slidably fits the second sliding groove. A fourth rack is disposed on the second middle frame, and the fourth tooth part is meshed with the fourth rack.

In a possible implementation, the stroke control mechanism includes a stroke amplification lever. In a length direction of the stroke amplification lever, the stroke amplification lever has a first end part, a second end part, and a middle part located between the first end part and the second end part. A first lever sliding groove is disposed at the middle part, and a second lever sliding groove is disposed at the second end part. A drive sliding part that rotatably and slidably fits the first lever sliding groove is disposed on the drive sliding block, and the drive sliding part can rotate and slide in the first lever sliding groove.

The first end part is hinged to the support plate mechanism, and a middle frame sliding part that rotatably and slidably fits the second lever sliding groove is disposed on the second middle frame. Alternatively, the first end part is hinged to the second middle frame, and a support sliding part that rotatably and slidably fits the second lever sliding groove is disposed on the support plate mechanism.

In a possible implementation, the first middle frame has a first surface and a second surface that are opposite to each other. The first surface is configured to carry a flexible display. The first axis is located on one side of the second surface, and an accommodating groove is formed on the second surface. When the foldable apparatus is folded, the accommodating groove may be configured to accommodate the second middle frame.

In a possible implementation, two foldable structures are disposed between the first middle frame and the second middle frame in the extension direction of the first axis, to provide more stable support for folding and unfolding between the first middle frame and the second middle frame.

According to a second aspect, this application further provides a terminal device, which is specifically a flexible foldable terminal product like a foldable mobile phone, a foldable tablet computer, or a foldable computer. The terminal device specifically includes a flexible display and any one of the foregoing foldable apparatuses. The flexible display may be divided into a first fastening area, a second fastening area, and a bending area located between the first fastening area and the second fastening area. The flexible display may be bent, and the foldable apparatus is configured to support folding and unfolding of the flexible display. The first fastening area is fastened to the first middle frame, and the second fastening area is fastened to the second middle frame.

### BRIEF DESCRIPTION OF DRAWINGS

FIG. 1a is a diagram of a terminal device in an unfolded state according to an embodiment of this application;
FIG. 1b is a diagram of a terminal device in a folded state according to an embodiment of this application;
FIG. 2 is an exploded view of a terminal device according to an embodiment of this application;
FIG. 3a is a diagram of a foldable apparatus in an unfolded state according to an embodiment of this application;
FIG. 3b is a diagram of a foldable apparatus in a folded state according to an embodiment of this application;
FIG. 4a is a diagram of a foldable apparatus in an unfolded state according to an embodiment of this application;
FIG. 4b is a diagram of a foldable apparatus in an unfolded state according to an embodiment of this application;
FIG. 4c is a diagram of a foldable apparatus in a folded state according to an embodiment of this application;
FIG. 5a is an exploded view of a foldable apparatus according to an embodiment of this application;
FIG. 5b is an exploded view of a foldable apparatus according to an embodiment of this application;
FIG. 6 is an exploded view of a middle support plate mechanism in a foldable apparatus according to an embodiment of this application;
FIG. 7a is a diagram of structures of a hinge component and a middle frame sliding block in a foldable apparatus according to an embodiment of this application;
FIG. 7b is an exploded view of a hinge component and a middle frame sliding block in a foldable apparatus according to an embodiment of this application;
FIG. 8 is a diagram of a structure of a fastening shaft in a foldable apparatus according to an embodiment of this application;
FIG. 9 is a diagram of structures of a fastening shaft and a connecting rod base in a foldable apparatus according to an embodiment of this application;
FIG. 10 is a diagram of a structure of a connecting rod base in a foldable apparatus according to an embodiment of this application;
FIG. 11 is a diagram of a structure of a drive connecting rod in a foldable apparatus according to an embodiment of this application;
FIG. 12a is a diagram of a structure of a drive sliding block in a foldable apparatus according to an embodiment of this application;
FIG. 12b is a top view of a drive sliding block in a foldable apparatus according to an embodiment of this application;
FIG. 13 is an exploded view of a hinge component and a middle frame sliding block in a foldable apparatus according to an embodiment of this application;
FIG. 14 is a diagram of a structure of a damping sliding block in a foldable apparatus according to an embodiment of this application;
FIG. 15 is a diagram in which a cam surface is in contact with and fits a wave-shaped surface in a foldable apparatus according to an embodiment of this application;
FIG. 16a is a simplified diagram of a transmission structure of a foldable apparatus according to an embodiment of this application;
FIG. 16b is a simplified diagram of a transmission structure of a foldable apparatus according to an embodiment of this application;
FIG. 16c is a simplified diagram of a transmission structure of a foldable apparatus according to an embodiment of this application;
FIG. 17 is a simplified diagram of a structure of a stroke amplification gear in a foldable apparatus according to an embodiment of this application;
FIG. 18a is a diagram of a foldable apparatus in an unfolded state according to an embodiment of this application;
FIG. 18b is a diagram of a foldable apparatus in a folded state according to an embodiment of this application;
FIG. 19a is a diagram of a sectional structure at W1-W1 in FIG. 18a;
FIG. 19b is a diagram of a sectional structure at W2-W2 in FIG. 18a;
FIG. 20a is a diagram of a sectional structure at W1-W1 in FIG. 18a in a process in which a foldable apparatus switches from an unfolded state to a folded state;
FIG. 20b is a diagram of a sectional structure at W2-W2 in FIG. 18a in a process in which a foldable apparatus switches from an unfolded state to a folded state;
FIG. 21a is a diagram of a sectional structure at V1-V1 in FIG. 18b;
FIG. 21b is a diagram of a sectional structure at V2-V2 in FIG. 18b;
FIG. 22a is a diagram of a structure of a stroke amplification gear in a foldable apparatus according to an embodiment of this application;
FIG. 22b is a diagram of a structure of a stroke amplification gear in a foldable apparatus according to an embodiment of this application;
FIG. 23a is a diagram of a structure of a stroke amplification lever in a foldable apparatus according to an embodiment of this application;
FIG. 23b is a diagram of a structure of a stroke amplification lever in a foldable apparatus according to an embodiment of this application;
FIG. 24a is a diagram of a foldable apparatus in an unfolded state according to an embodiment of this application;
FIG. 24b is a diagram of a foldable apparatus in a folded state according to an embodiment of this application;
FIG. 25 is an exploded view of a foldable apparatus according to an embodiment of this application;
FIG. 26a is a diagram of a partial structure of a foldable apparatus in an unfolded state according to an embodiment of this application;
FIG. 26b is an exploded view of a partial structure of a foldable apparatus according to an embodiment of this application;
FIG. 27a is a diagram of structures of a connection plate and a first connection rotating shaft in a foldable apparatus according to an embodiment of this application;
FIG. 27b is a diagram of a partial structure in a foldable apparatus according to an embodiment of this application;
FIG. 28 is a diagram of structures of a first support plate and a second connection rotating shaft in a foldable apparatus according to an embodiment of this application;
FIG. 29 is a diagram of a partial structure in a foldable apparatus according to an embodiment of this application;
FIG. 30 is an exploded view of a partial structure in a foldable apparatus according to an embodiment of this application;
FIG. 31a is a simplified diagram of a transmission structure of a foldable apparatus according to an embodiment of this application;
FIG. 31b is a simplified diagram of a transmission structure of a foldable apparatus according to an embodiment of this application;
FIG. 31c is a simplified diagram of a transmission structure of a foldable apparatus according to an embodiment of this application;
FIG. 32a is a diagram of a foldable apparatus in an unfolded state according to an embodiment of this application;
FIG. 32b is a diagram of a foldable apparatus in a folded state according to an embodiment of this application;
FIG. 33a is a diagram of a sectional structure at U1-U1 in FIG. 32a;
FIG. 33b is a diagram of a sectional structure at U2-U2 in FIG. 32a;
FIG. 33c is a diagram of a sectional structure at U3-U3 in FIG. 32a;
FIG. 34a is a diagram of a sectional structure at Q1-Q1 in FIG. 32b;
FIG. 34b is a diagram of a sectional structure at Q2-Q2 in FIG. 32b;
FIG. 34c is a diagram of a sectional structure at Q3-Q3 in FIG. 32b; and
FIG. 35 is a diagram of a foldable apparatus in an unfolded state according to an embodiment of this application.

Reference numerals: 100: terminal device; 10: foldable apparatus; 20: flexible display; 1: first middle frame; 2: second middle frame; 21: middle frame sliding block; 211: first sliding groove; 212: third rack; 213: fourth rack; 214: middle frame sliding part; 3: foldable structure; 31: support plate mechanism; 311: first support plate; 3111: first rack; 3112: second rack; 3113: second sliding rod; 3114: support sliding part; 3115: rotation part; 312: second support plate; 313: second connection rotating shaft; 32: hinge mechanism; 321: fastening component; 3211: connecting rod base; 3212: fastening shaft; 32121: fastening plate; 3213: connection substrate; 32131: first base body; 32132: second base body; 3214: connection plate; 3215: first connection rotating shaft; 322: drive connecting rod; 323: drive sliding block; 3231: drive sliding part; 324: damping component; 3241: damping spring; 3242: damping sliding block; 325: first damping unit; 3251: first spring; 3252: first sliding block; 326: second damping unit; 3261: second spring; 3262: second sliding block; 33: stroke control mechanism; 331: stroke amplification gear; 3311: first tooth part; 3312: first sliding rod; 3313: second tooth part; 3314: third tooth part; 3315: second sliding groove; 3316: fourth tooth part; 332: stroke amplification lever; 3321: first end part; 3322: second end part; 3323: middle part; 41: first meshing tooth; 42: second meshing tooth; 51: first central shaft; 52: second central shaft; 6: fastening member; 7: side baffle; 81: first shaft groove; 82: second shaft groove; al: display surface; a2: mounting surface; b1: mounting part; b2: mounting position; c1: fastening hole; c2: fastening pillar; d: first pin shaft; e: base shaft hole; f1: first stop hole; f2: second stop hole; gl: first pin hole; g2: second pin hole; h1: second pin shaft; h2: third pin hole; i: rod part; j 1: cam surface; j2: wave-shaped surface; k1: protrusion part; k2: groove part; m1: first surface; m2: second surface; p1: first shaft hole; p2: second shaft hole; q: clamping member; t1: fastening shaft avoidance groove; t2: clamping groove; X1: first fastening area; X2: bending area; X3: second fastening area; Z: accommodating groove; N1: first distance; N2: second distance; P1: drive sliding groove; P2: middle frame sliding groove; R1: first transmission end; R2: second transmission end; S1: first spacing; S2: second spacing; Y1: first lever sliding groove; Y2: second lever sliding groove; L1: first axis; L2: second axis; L3: third axis; L4: fourth axis; L5: fifth axis; H1: first displacement; H2: second displacement; F: stop pin; E1: mounting part; E2: sliding block avoidance groove; B1: base flange; and B2: connecting rod flange.

### DESCRIPTION OF EMBODIMENTS

A hinge structure is disposed between two middle frames of a flexible foldable terminal product, and the hinge structure may drive the two middle frames to be folded or unfolded relative to each other through a structure change. During folding and unfolding of the flexible foldable terminal device, it needs to be ensured that a flexible display is flat without a wrinkle. Usually, the two middle frames are symmetrically disposed relative to the hinge structure. This structure increases costs and a weight of the product.

Based on this, embodiments of this application provide a foldable apparatus and a terminal device having the foldable apparatus, to implement asymmetric folding of the terminal device, and keep a flexible display flat without a wrinkle in folding and unfolding processes.

Terms used in the following embodiments are merely intended to describe specific embodiments, but are not intended to limit this application. Terms "one", "a", "the", "the foregoing", "this" and "the one" of singular forms used in this specification and the appended claims of this application are also intended to include expressions such as "one or more", unless otherwise specified in the context clearly.

Referring to "an embodiment", "some embodiments", or the like in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "have", and their variants all mean "include but are not limited to", unless otherwise specifically emphasized in another manner.

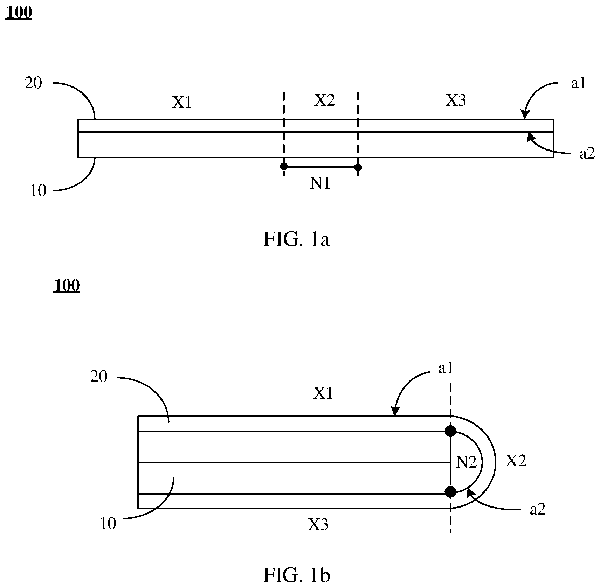

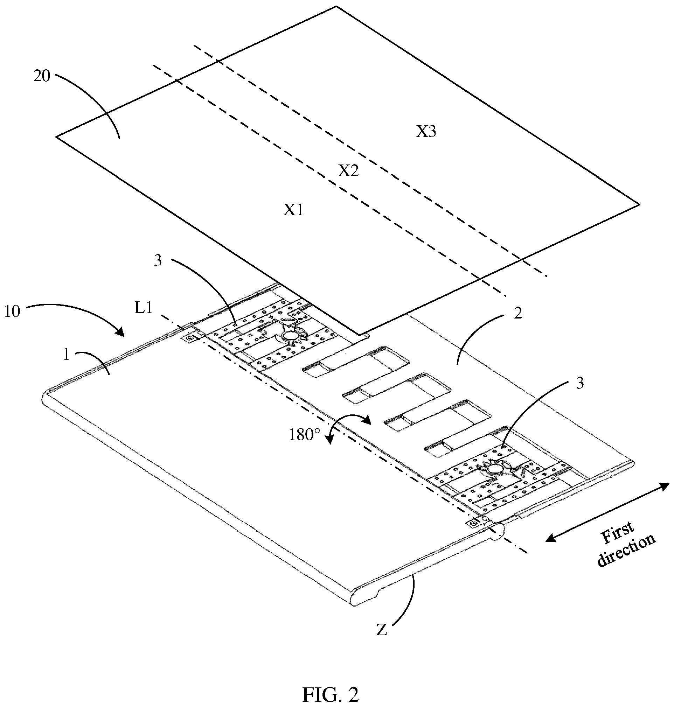

FIG. 1a and FIG. 1b show a terminal device 100 according to an embodiment of this application. The terminal device 100 may be specifically a foldable electronic device, for example, a foldable mobile phone or a foldable computer. Specifically, the terminal device 100 includes a flexible display 20 and a foldable apparatus 10. The flexible display 20 is configured to display an image of the device, and may be an organic light-emitting diode (organic light-emitting diode, OLED) display. The flexible display 20 is bendable, and can implement folding and unfolding of a structure under external force. The flexible display 20 has a display surface a1 and a mounting surface a2. The foldable apparatus 10 is disposed on one side of the mounting surface a2 of the flexible display 20, that is, the mounting surface a2 of the flexible display 20 is mounted on the foldable apparatus 10. Herein, the foldable apparatus 10 is configured to support the flexible display 20 in folding and unfolding processes of the flexible display 20. The flexible display 20 has a first fastening area X1, a second fastening area X3, and a bending area X2 located between the first fastening area X1 and the second fastening area X3. The first fastening area X1 and the second fastening area X3 are separately fastened to the foldable apparatus 10, and the bending area X2 is separated from the foldable apparatus 10. FIG. 1a is a diagram of the terminal device 100 in an unfolded state. A distance between a support point at which the foldable apparatus 10 supports the first fastening area X1 and a support point at which the foldable apparatus 10 supports the second fastening area X3 is a first distance N1, and a length of the first distance N1 is consistent with a length of the bending area X2. When the terminal device 100 is folded to a state shown in FIG. 1b, the first fastening area X1 and the second fastening area X3 of the flexible display 20 are equivalent to being folded by 180°, the distance between the support point at which the foldable apparatus 10 supports the first fastening area X1 and the support point at which the foldable apparatus 10 supports the second fastening area X3 is a second distance N2, and the second distance N2 is less than the length of the bending area X2. In other words, when the flexible display 20 switches between the unfolded state shown in FIG. 1a and the folded state shown in FIG. 1b, the foldable apparatus 10 needs to adjust the distance between the support point at which the foldable apparatus 10 supports the first fastening area X1 and the support point at which the foldable apparatus 10 supports the second fastening area X3, to ensure that the flexible display 20 is not wrinkled or pulled, and keeps flat. In an embodiment provided in this application, for the terminal device 100 shown in FIG. 2, the flexible display 20 is separated from the foldable apparatus 10. The foldable apparatus 10 includes a first middle frame 1, a second middle frame 2, and a foldable structure 3 disposed between the first middle frame 1 and the second middle frame 2. A side that is of the first middle frame 1 and that faces the second middle frame 2 is connected to the foldable structure 3. A side that is of the first middle frame 1 and that is configured to connect to the foldable structure 3 has a first axis L1, and the first axis L1 may be considered as an axis around which the second middle frame 2 rotates relative to the first middle frame 1. The first fastening area X1 of the flexible display 20 is fastened to the first middle frame 1, the second fastening area X3 is fastened to the second middle frame 2, and the bending area X2 is bent by using the first axis L1 as a center. In the unfolding and folding processes of the terminal device 100, the foldable structure 3 may drive the second middle frame 2 to rotate around the first axis L1 relative to the first middle frame 1 to implement folding. To keep the flexible display 20 flat in the folding and unfolding processes, the foldable structure 3 further drives the second middle frame 2 to slide in a first direction relative to the first middle frame 1. The first direction is perpendicular to the first axis L1, and the first direction is parallel to a plane on which the second middle frame 2 is located.

For example, two foldable structures 3 are disposed in an extension direction of the first axis L1, so that stability of rotation of the second middle frame 2 relative to the first middle frame 1 can be improved.

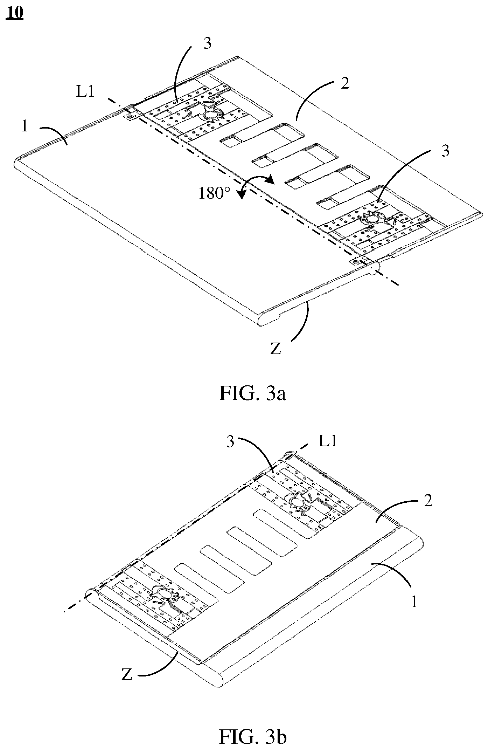

Specifically, with reference to FIG. 2, FIG. 3a is a diagram of a structure of the foldable apparatus 10 when the terminal device 100 is in a first state. The first middle frame 1 keeps aligned with the second middle frame 2, and the foldable structure 3 is connected between the first middle frame 1 and the second middle frame 2. A surface that is of the first middle frame 1 and that is configured to carry the flexible display 20 and a surface that is of the second middle frame 2 and that is configured to carry the flexible display 20 are equivalent to 180°. When the second middle frame 2 rotates and is folded relative to the first middle frame 1 around the first axis L1 until a surface that is of the second middle frame 2 and that is away from the flexible display 20 is attached to a surface that is of the first middle frame 1 and that is away from the flexible display 20, a structure of the foldable apparatus 10 is shown in FIG. 3b.

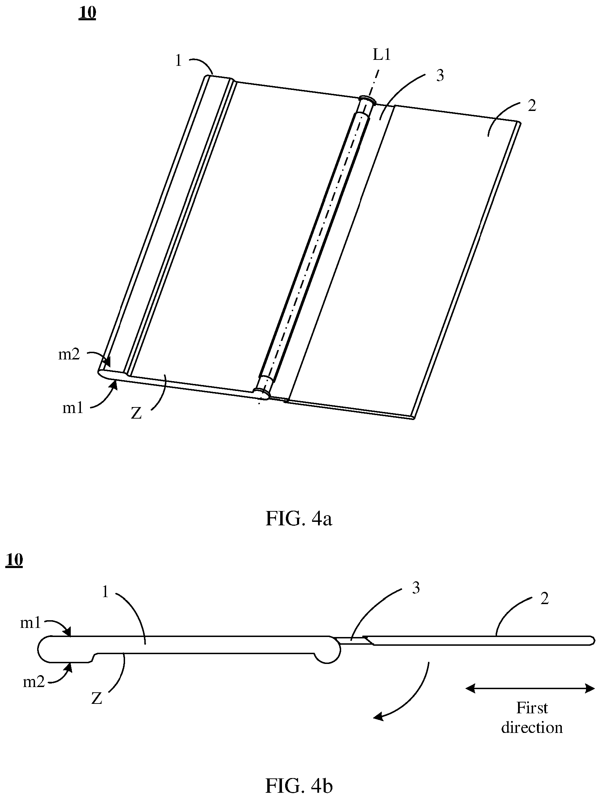

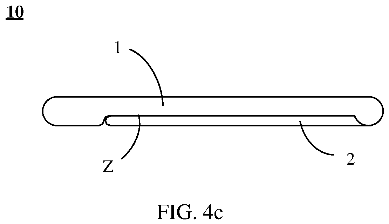

With reference to FIG. 3a and FIG. 3b, as shown in FIG. 4a, the first middle frame 1 has a first surface m1 and a second surface m2, the first surface m1 is configured to carry the flexible display 20, and the second surface m2 is a surface away from the flexible display 20. The first axis L1 is located on one side of the second surface m2. An accommodating groove Z may be disposed on the second surface m2 of the first middle frame 1. When the foldable apparatus 10 switches from a status in FIG. 4b to a status in FIG. 4c, the foldable structure 3 drives the second middle frame 2 to approach the first axis L1. When the foldable apparatus 10 is in the folded state shown in FIG. 4c, the second middle frame 2 may be accommodated in the accommodating groove Z.

Certainly, a structure of the accommodating groove Z is not a necessary structure for the foldable apparatus 10. In some embodiments, the accommodating groove Z is not disposed on the first middle frame 1, and folding and unfolding of the first middle frame 1, the second middle frame 2, and the foldable structure 3 can also be implemented.

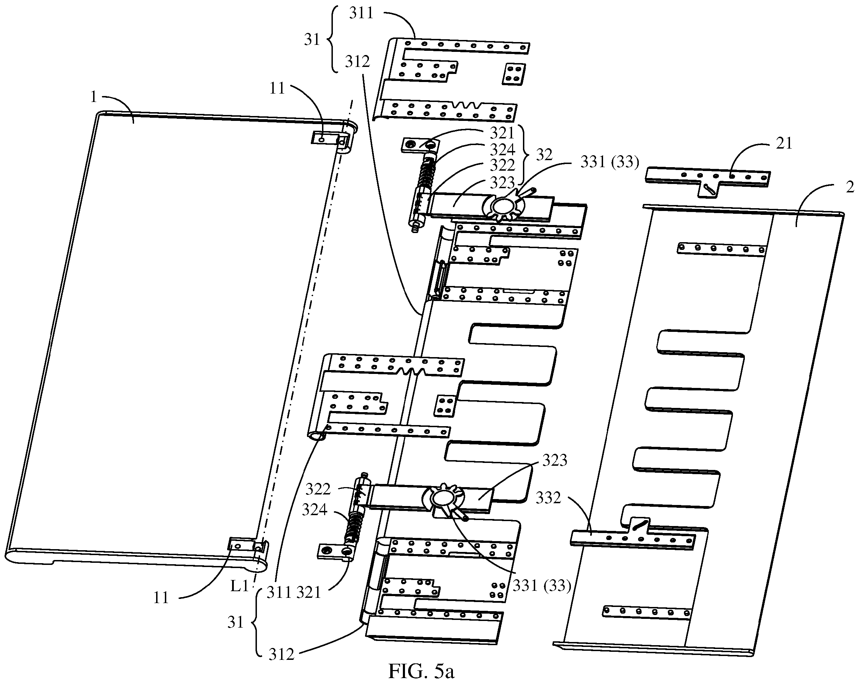

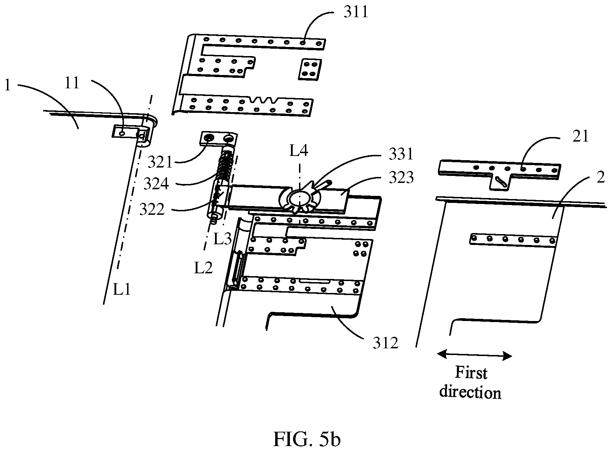

FIG. 5a is an exploded view of the foldable apparatus 10. Two foldable structures 3 are disposed between the first middle frame 1 and the second middle frame 2, and each foldable structure 3 specifically includes a support plate mechanism 31, a hinge mechanism 32, and a stroke control mechanism 33. In an example of a basic structure in FIG. 5b, the support plate mechanism 31 includes a first support plate 311 and a second support plate 312, and the hinge mechanism 32 includes a fastening component 321, a drive connecting rod 322, a drive sliding block 323, and a damping component 324. In the following embodiments, specific structures of one foldable structure 3 are used for description. It should be understood that the specific structures in the foldable structure 3 below are structures in a same foldable structure 3.

FIG. 5b is an exploded view of a foldable structure 3 between the first middle frame 1 and the second middle frame 2. A fastening groove 11 is disposed on a side that is of the first middle frame 1 and that faces the foldable structure 3, and the fastening component 321 may be fastened to the fastening groove 11. The support plate mechanism 31 is mounted on the fastening component 321 and rotatable around the first axis L1, and the support plate mechanism 31 is also rotatable around the first axis L1 relative to the first middle frame 1. The drive connecting rod 322 is mounted on the fastening component 321 and rotatable around a second axis L2, and the drive sliding block 323 is mounted on the drive connecting rod 322 and rotatable around a third axis L3. In addition, the drive sliding block 323 can slidably fit the first support plate 311 in the support plate mechanism 31. A middle frame sliding block 21 is disposed on the second middle frame 2, and the middle frame sliding block 21 is fastened to the second middle frame 2. The stroke control mechanism 33 is in transmission connection between the middle frame sliding block 21 and the support plate mechanism 31. In a process in which the second middle frame 2 rotates relative to the first middle frame 1, the drive sliding block 323, the support plate mechanism 31, and the second middle frame 2 are equivalently located on a same plane. When the support plate mechanism 31 rotates around the first axis L1 relative to the fastening component 321, the drive sliding block 323 and the second middle frame 2 also rotate around the first axis L1 relative to the fastening component 321.

For example, the stroke control mechanism 33 includes a stroke amplification gear 331, the stroke amplification gear 331 is mounted on the drive sliding block 323 and rotatable around a fourth axis L4, and an axis of the stroke amplification gear 331 is coaxial with the fourth axis L4. It should be understood that the first axis L1, the second axis L2, and the third axis L3 are always parallel to each other, positions of the first axis L1 and the second axis L3 are fixed in a motion process of the foldable structure 3, and the position of the third axis L3 changes with rotation of the drive connecting rod 322 around the second axis L2. The fourth axis L4 is perpendicular to the first axis L1 and the first direction, and the fourth axis L4 is also perpendicular to the second axis L2 and the third axis L3.

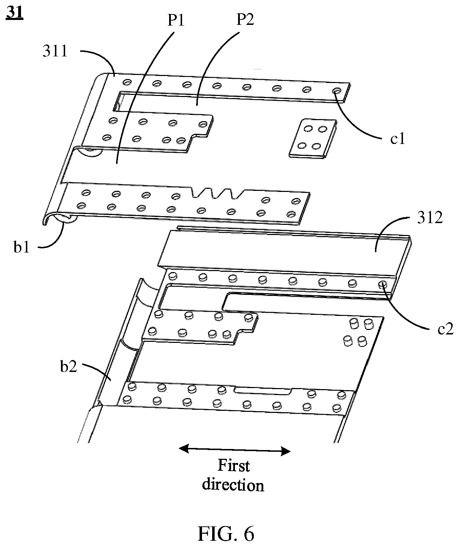

With reference to FIG. 5b, refer to a diagram of a structure of the support plate mechanism 31 shown in FIG. 6. The support plate mechanism 31 includes the first support plate 311 and the second support plate 312, and the first support plate 311 and the second support plate 312 keep aligned with the second middle frame 2. The first support plate 311 and the second support plate 312 may be fastened through snap-fitting in a thickness direction of the second middle frame 2. A plurality of fastening holes c1 are disposed on the first support plate 311, and a plurality of fastening pillars c2 are disposed on the second support plate 312. When the first support plate 311 and the second support plate 312 are snap-fitted in the thickness direction of the second middle frame 2, the plurality of fastening holes c1 may fit and be fastened to the plurality of fastening pillars c2 in a one-to-one correspondence. With reference to FIG. 5b and FIG. 6, in the two groups of foldable structures 3, the two second support plates 312 may be of an integrated structure, to simplify a manufacturing process and facilitate mounting.

As shown in FIG. 6, a side that is of the first support plate 311 and that faces the first middle frame 1 is in an arc shape, and a concave surface of the arc shape faces the second support plate 312. Correspondingly, a side surface that is of the second support plate 312 and that faces the first middle frame 1 is in an arc shape, and a concave surface of the arc faces the first support plate 311. When the support plate mechanism 31 and the fastening component 321 are mounted, the arc-shaped side surface of the first support plate 311 and the arc-shaped side surface of the second support plate 312 can be snap-fitted to each other to form space that may accommodate the fastening component 321. A cylindrical mounting part b1 is disposed on a side that is of the first support plate 311 and that faces the second support plate 312. A mounting position b2 that fits the mounting part b1 is disposed on a side that is of the second support plate 312 and that faces the first support plate 311. With reference to FIG. 5b and FIG. 6, when the first support plate 311 is mounted on the first middle frame 1, an axis of the mounting part b1 is collinear with the first axis L1.

In FIG. 6, a drive sliding groove P1 and a middle frame sliding groove P2 are further disposed on the first support plate 311, and both the drive sliding groove P1 and the middle frame sliding groove P2 are of hollow structures and extend in the first direction. The drive sliding groove P1 is configured to accommodate the drive sliding block 323, and the middle frame sliding groove P2 is configured to accommodate the middle frame sliding block 21. With reference to FIG. 5b, to facilitate transmission connection between the stroke amplification gear 331 and the middle frame sliding block 21, the drive sliding groove P1 communicates with the middle frame sliding groove P2.

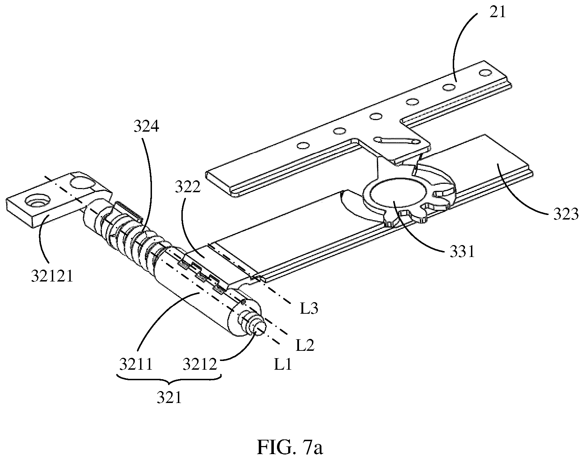

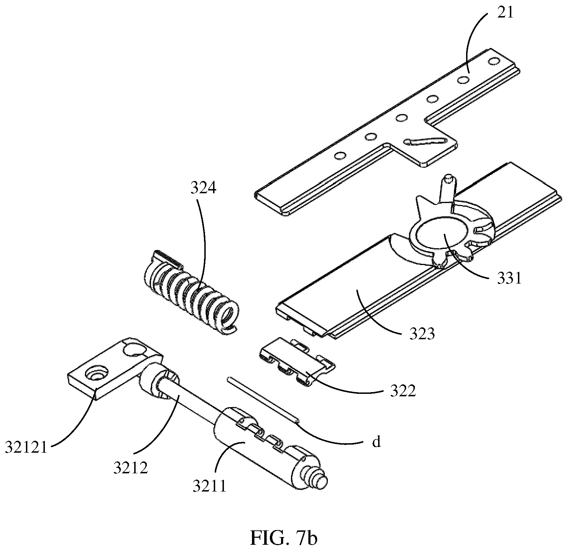

Refer to diagrams of structures of the hinge mechanism 32 and the middle frame sliding block 21 shown in FIG. 7a and FIG. 7b. The fastening component 321 specifically includes a connecting rod base 3211 and a fastening shaft 3212, and a fastening plate 32121 is disposed at a first end of the fastening shaft 3212. The fastening plate 32121 may be fastened to the fastening groove 11 of the first middle frame 1, to fasten the fastening shaft 3212 to the first middle frame 1. When the fastening plate 32121 is fastened to the first middle frame 1, an axis of the fastening shaft 3212 is collinear with the first axis L1. The connecting rod base 3211 is coaxially fastened to the fastening shaft 3212, and the damping component 324 is disposed between the fastening plate 32121 and the connecting rod base 3211. A first end of the drive connecting rod 322 is hinged to the connecting rod base 3211 via the first pin shaft d, so that the first end of the drive connecting rod 322 is rotatable around the second axis L2 relative to the connecting rod base 3211. The drive sliding block 323 is mounted at a second end of the drive connecting rod 322 and rotatable around the third axis L3. The stroke amplification gear 331 is mounted on the drive sliding block 323 and rotatable around the fourth axis L4, and the stroke amplification gear 331 is in transmission connection to the middle frame sliding block 21.

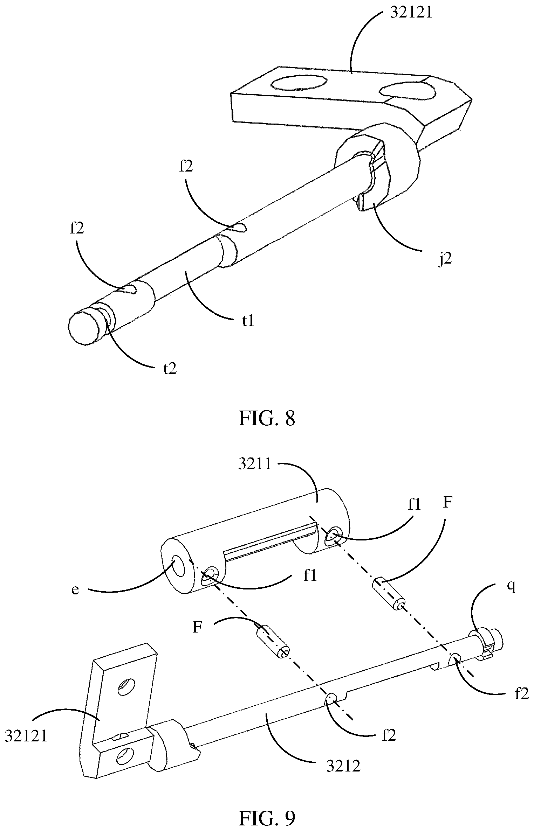

Further, refer to a structure of the fastening shaft 3212 shown in FIG. 8. As shown in FIG. 8, the fastening plate 32121 is disposed at one end of the fastening shaft 3212, and a ring-shape clamping groove t2 is disposed at an end that is of the fastening shaft 3212 and that is away from the fastening plate 32121. A wave-shaped surface j2 is disposed on a side that is of the fastening plate 32121 and that faces the clamping groove t2, and the wave-shaped surface j2 is configured to fit the damping component 324. A fastening shaft avoidance groove t1 is disposed between the wave-shaped surface j2 and the clamping groove t2, the fastening shaft avoidance groove t1 is configured to fit the connecting rod base 3211, and second stop holes f2 are disposed on two sides of the fastening shaft avoidance groove t1. The fastening shaft 3212 may penetrate the mounting part b1 on the first support plate 311, and the mounting part b1 rotatably fits the fastening shaft 3212, so that the first support plate 311 is rotatable around the first axis L1 relative to the fastening component 321.

With reference to FIG. 8, refer to a diagram of structures of the connecting rod base 3211 and the fastening shaft 3212 shown in FIG. 9. A base shaft hole e for the fastening shaft 3212 to penetrate is disposed on the connecting rod base 3211, and the end that is of the fastening shaft 3212 and that is away from the fastening plate 32121 may penetrate the base shaft hole e to expose the clamping groove t2 on the fastening shaft 3212. A clamping member q is locked in the clamping groove t2 for limiting. When the fastening component 321 is fastened to the first middle frame 1, an axis of the base shaft hole e is collinear with the first axis L1. First stop holes f1 are disposed on the connecting rod base 3211, and second stop holes f2 are correspondingly disposed on the fastening shaft 3212. When a second end of the fastening shaft 3212 penetrates the base shaft hole e of the connecting rod base 3211, the first stop hole f1 and the second stop hole f2 may be fastened via a stop pin F, to fasten the fastening shaft 3212 to the connecting rod base 3211.

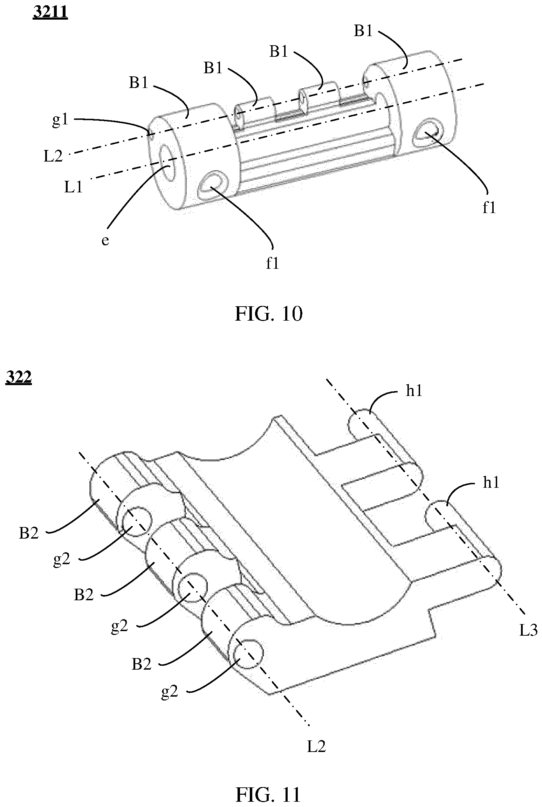

As shown in FIG. 10, a group of base flanges B1 are further disposed on the connecting rod base 3211, and a first pin hole g1 is disposed on each base flange B1. Axes of the first pin holes g1 are collinear with each other and parallel to the first axis L1. A base notch is formed between any two adjacent base flanges B1. An axis on which the axis of the first pin hole g1 is located is defined as the second axis L2. With reference to FIG. 7a, the first end of the drive connecting rod 322 is mounted on the connecting rod base 3211 and rotatable around the second axis L2, so that the drive connecting rod 322 is rotatable around the second axis L2 relative to the connecting rod base 3211. It should be understood that shapes and structures of the base flanges B1 may be inconsistent, provided that the axes of the first pin holes g1 can be collinear.

Further, for a structure of the drive connecting rod 322, refer to FIG. 11. A group of connecting rod flanges B2 are disposed at the first end of the drive connecting rod 322, a second pin hole g2 is disposed on each connecting rod flange B2, and axes of the second pin holes g2 are collinear. When the drive connecting rod 322 is mounted on the connecting rod base 3211, each connecting rod flange B2 may correspondingly extend into a base notch between two base flanges B1, and the axis of the second pin hole g2 and the axis of the first pin hole g1 are both collinear with the second axis L2. The second pin hole g2 is hinged to the first pin hole g1 via the first pin shaft d, so that the drive connecting rod 322 is rotatable around the second axis L2 relative to the connecting rod base 3211.

Still refer to FIG. 11. A group of second pin shafts h1 are disposed at the second end of the drive connecting rod 322, axes of the second pin shafts h1 are collinear, and the axis of the second pin shaft h1 is defined as the third axis L3.

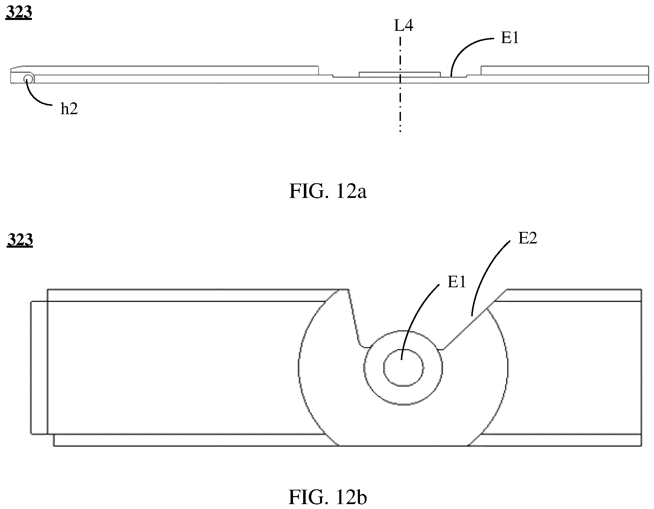

Refer to a diagram of a structure of the drive sliding block 323 shown in FIG. 12a. A third pin hole h2 is disposed at a first end of the drive sliding block 323. With reference to FIG. 11, the first end of the drive sliding block 323 is mounted to the second end of the drive connecting rod 322, and the second pin shaft h1 at the second end of the drive connecting rod 322 may extend into the third pin hole h2 of the drive sliding block 323. Both the axis of the second pin shaft h1 and an axis of the third pin hole h2 are collinear with the third axis L3, so that the drive sliding block 323 is rotatable around the third axis L3 relative to the drive connecting rod 322.

Still refer to a top view of the drive sliding block 323 shown in FIG. 12b. A shape of the drive sliding block 323 can match the drive sliding groove P1 on the first support plate 311. When the drive sliding block 323 adapts to the drive sliding groove P1, the drive sliding block 323 is slidable relative to the support plate mechanism 31.

With reference to FIG. 12a and FIG. 12b, a mounting part E1 configured to mount the stroke amplification gear 331 is further disposed on the drive sliding block 323. The stroke amplification gear 331 is hinged to the mounting part E1, the stroke amplification gear 331 is rotatable around a fourth axis L4 relative to the drive sliding block 323, and the fourth axis L4 is perpendicular to the drive sliding block 323. In some embodiments, a sliding block avoidance groove E2 configured to avoid the middle frame sliding block 21 may be further disposed on the drive sliding block 323.

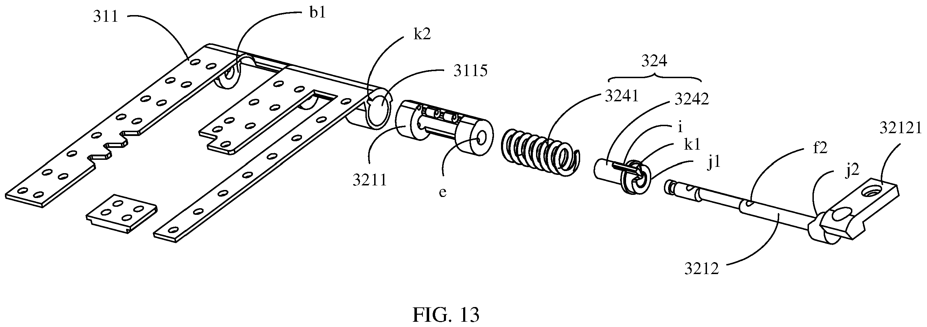

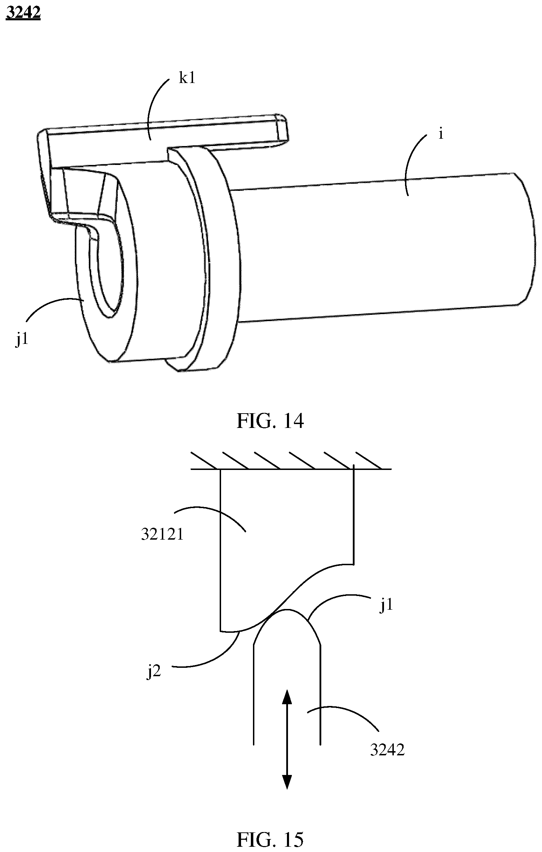

With reference to FIG. 7a, as shown in FIG. 13, the damping component 324 is disposed between the support plate mechanism 31 and the fastening component 321, to provide restoring force in a process in which the support plate mechanism 31 rotates relative to the fastening component 321. A damping spring 3241 and a damping sliding block 3242 of the damping component 324 are sequentially disposed between the fastening plate 32121 and the connecting rod base 3211 in a direction of the axis of the fastening shaft 3212. With reference to the damping sliding block 3242 shown in FIG. 14, a cam surface j1 is disposed at an end that is of the damping sliding block 3242 and that faces the fastening plate 32121, and the wave-shaped surface j2 is disposed on a side that is of the fastening plate 32121 and that faces the damping sliding block 3242. The cam surface j1 is in contact with and fits the wave-shaped surface j2. One end that is of the damping sliding block 3242 and that faces the connecting rod base 3211 forms a rod part i, and the damping spring 3241 is sleeved on the rod part i. One end of the damping spring 3241 abuts against an end surface that is of the connecting rod base 3211 and that faces the fastening plate 32121, and the other end abuts against a flange between the rod part i and the cam surface j1 of the damping sliding block 3242.

Still refer to FIG. 13. A protrusion part k1 is disposed on a side surface that is of the damping sliding block 3242 and that is parallel to the direction of the axis, and an extension direction of the protrusion part k1 is parallel to the direction of the axis of the fastening shaft 3212. Correspondingly, a rotation part 3115 is disposed on the first support plate 311, the rotation part 3115 is a cylinder with a cavity, and an axis of the rotation part 3115 is collinear with the axis of the mounting part b1. The damping sliding block 3242 and the damping spring 3241 may be accommodated in the cavity of the rotation part 3115. A groove part k2 is disposed on an inner wall of the rotation part 3115, and an extension direction of the groove part k2 is parallel to a direction of the axis of the rotation part 3115. When the first support plate 311 is mounted on the fastening component 321, both the axis of the rotation part 3115 and the axis of the fastening shaft 3212 are coaxial with the first axis L1, the protrusion part k1 adapts to the groove part k2, and the protrusion part k1 is movable relative to the groove part k2 in the extension direction of the first axis L1.

For a fit structure of the cam surface j1 and the wave-shaped surface j2, refer to a simplified diagram shown in FIG. 15. With reference to FIG. 15, when the first support plate 311 rotates around the first axis L1 relative to the fastening component 321, the groove part k2 rotates around the first axis L1 with the protrusion part k1, and further drives the damping sliding block 3242 to rotate around the first axis L1. When the damping sliding block 3242 rotates around the first axis L1, the cam surface j1 rotates relative to the wave-shaped surface j2. Because a position of the fastening plate 32121 is fixed, rotation of the cam surface j1 relative to the wave-shaped surface j2 pushes the damping sliding block 3242 to move in a straight line in the extension direction of the first axis L1. When the damping sliding block 3242 moves toward a side away from the fastening plate 32121, the damping spring 3241 is compressed by the damping sliding block 3242 to generate elastic potential energy, and the elastic potential energy may provide restoring force for the damping sliding block 3242 with a tendency to drive the damping sliding block 3242 to reset. The damping sliding block 3242 further transfers the force to the first support plate 311, so that the first support plate 311 tends to reset.

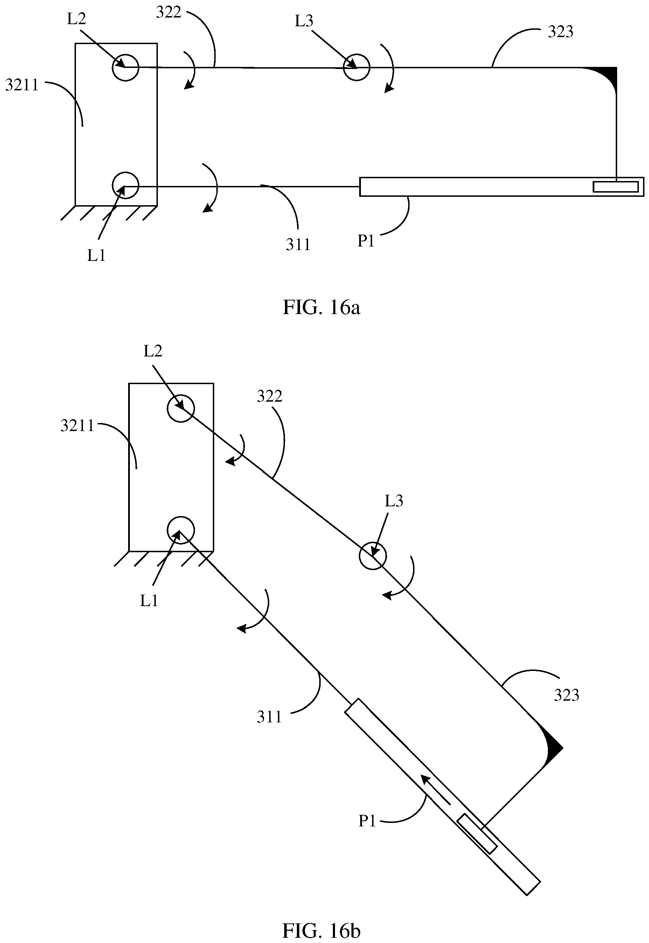

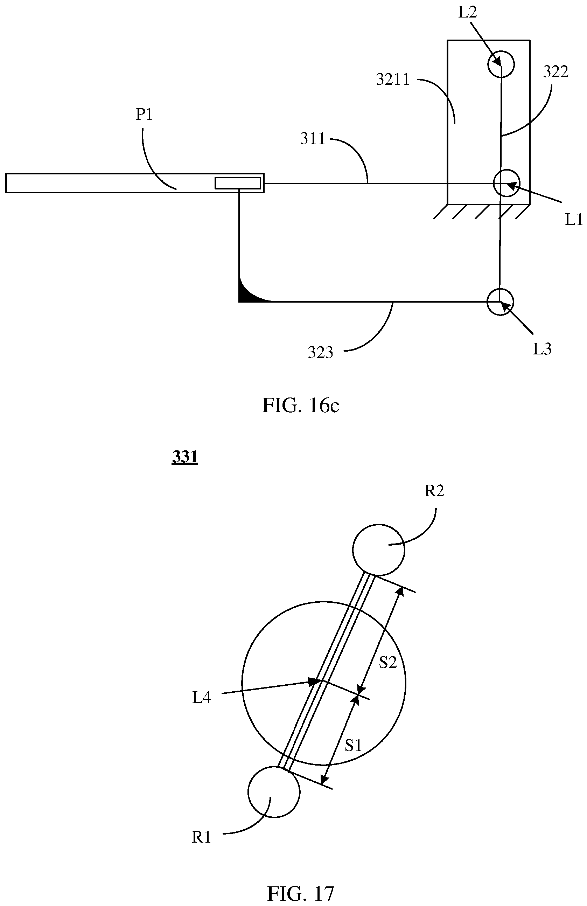

With reference to the foregoing embodiments, the structures of the support plate mechanism 31 and the hinge mechanism 32 may be simplified into simplified diagrams of transmission structures shown in FIG. 16a to FIG. 16c. FIG. 16a shows the foldable apparatus 10 in the unfolded state. The connecting rod base 3211 is fastened relative to the first middle frame 1, and the first support plate 311 is mounted on the connecting rod base 3211 and rotatable around the first axis L1. The first end of the drive connecting rod 322 is mounted on the connecting rod base 3211 and rotatable around the second axis L2, the first end of the drive sliding block 323 is mounted at the second end of the drive connection 322 and rotatable around the third axis L3, and the second end of the drive sliding block 323 slidably fits the drive sliding groove P1 of the first support plate 311. The first support plate 311, the drive connecting rod 322, and the drive sliding block 323 are equivalent to forming a composite structure of a crank slider mechanism and a crank guide rod structure. As shown in FIG. 16b, when the first support plate 311 rotates around the first axis L1, the drive sliding block 323 may be driven to rotate around the third axis L3 and slide in the drive sliding groove P1 in a direction close to the first axis L1, and the drive connecting rod 322 may be driven to rotate around the second axis L2. FIG. 16c shows the foldable apparatus 10 in the folded state. Compared with FIG. 16a, the first support plate 311 rotates by 180°. The drive sliding block 323 slides from an end that is of the drive sliding groove P1 and that is away from the first axis L1 to an end close to the first axis L1. By analogy, when the foldable apparatus 10 gradually unfolds from the folded state shown in FIG. 16c to the unfolded state shown in FIG. 16a, the drive sliding block 323 slides from the end that is of the drive sliding groove P1 and that is close to the first axis L1 to the end away from the first axis L1.

Refer to a simplified diagram of a structure of the stroke amplification gear 331 shown in FIG. 17. The stroke amplification gear 331 is mounted on the drive sliding block 323 and rotatable around the fourth axis L4. A first transmission end R1 and a second transmission end R2 are disposed on the stroke amplification gear 331. The first transmission end R1 is configured to be in transmission connection to the support plate mechanism 31, and the second transmission end R2 is configured to be in transmission connection to the middle frame sliding block 21. The first transmission end R1 and the second transmission end R2 are disposed opposite to each other, and a position of the first transmission end R1 and a position of the second transmission end R2 are centrosymmetrical with each other relative to the fourth axis L4. A distance between the first transmission end R1 and the fourth axis L4 is a first spacing S1, a distance between the second transmission end R2 and the fourth axis L4 is a second spacing S2, and the second spacing S2 is greater than the first spacing S1. When the stroke amplification gear 331 rotates around the fourth axis L4, a linear speed of the first transmission end R1 is less than a linear speed of the second transmission end R2. It may be considered that the stroke amplification gear 331 may amplify motion displacement of the first transmission end R1 to motion displacement of the second transmission end R2.

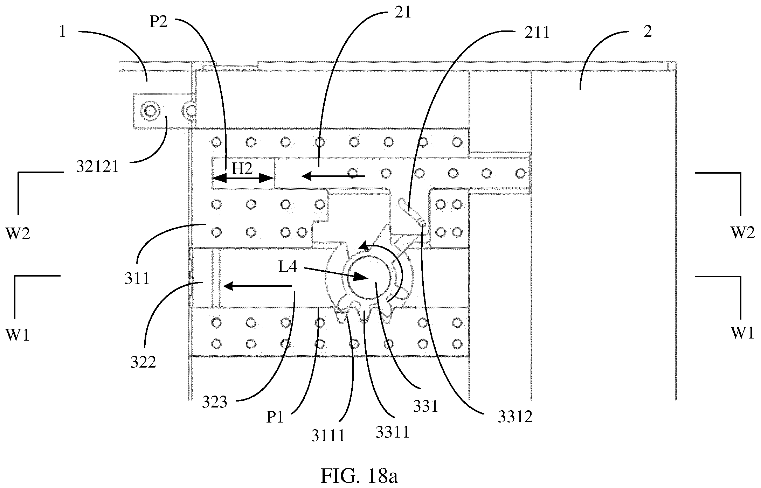

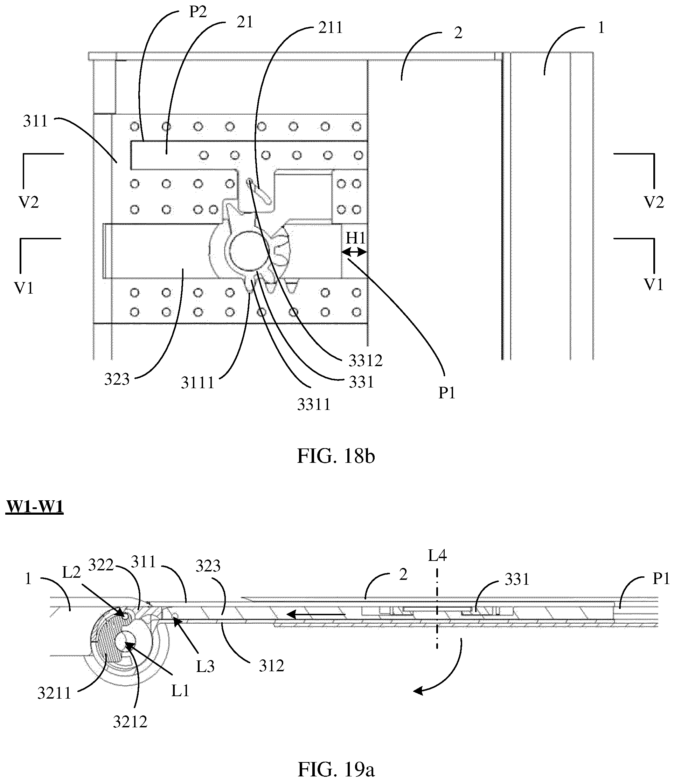

Refer to the foldable apparatus 10 shown in FIG. 18a and FIG. 18b. The drive sliding block 323 slidably fits the drive sliding groove P1 on the first support plate 311, and the middle frame sliding block 21 slidably fits the middle frame sliding groove P2 on the first support plate 311. The stroke amplification gear 331 is mounted on the drive sliding block 323 and rotatable around the fourth axis L4, and the stroke amplification gear 331 is in transmission connection between the first support plate 311 and the middle frame sliding groove 332. In the stroke amplification gear 331, the first transmission end R1 is, for example, a first tooth part 3311, and the second transmission end R2 is, for example, a first sliding rod 3312. Correspondingly, a first rack 3111 is disposed on the first support plate 311, and the first tooth part 3311 is meshed with the first rack 3111. A first sliding groove 211 is disposed on the middle frame sliding block 21, and the first sliding rod 3312 slidably fits the first sliding groove 211.

FIG. 18a is a diagram of the foldable apparatus 10 in the unfolded state. A distance between a side that is of the middle frame sliding block 21 and that faces the first middle frame 1 and a side that is of the middle frame sliding groove P2 and that is close to the first middle frame 1 may be defined as first displacement H1. When the foldable apparatus 10 is folded from the unfolded state shown in FIG. 18a to the folded state shown in FIG. 18b, the drive sliding block 323 slides relative to the first support plate 311 in a direction close to the first middle frame 1, to generate the first displacement H1. Due to meshing transmission between the first tooth part 3311 and the first rack 3111, the stroke amplification gear 331 rotates clockwise. The first sliding rod 3312 rotates counterclockwise accordingly, and the first sliding rod 3312 slides in the first sliding groove 211 from an end that is of the first sliding groove 211 and that faces the second middle frame 2 to an end away from the second middle frame 2. Further, the middle frame sliding block 21 is driven to slide relative to the first support plate 311 in the direction close to the first middle frame 1, to generate second displacement H2. With reference to FIG. 17, the linear speed of the first tooth part 3311 used as the first transmission end R1 is less than the linear speed of the first sliding rod 3312 used as the second transmission end R2. Therefore, the first displacement H1 is less than the second displacement H2. It may be considered that the stroke amplification gear 331 amplifies displacement of the drive sliding block 323 relative to the first support plate 311 to displacement of the middle frame sliding block 21 relative to the first support plate 311. Because the middle frame sliding block 21 is fastened to the second middle frame 2, it may also be considered that when the foldable apparatus 10 is folded from the unfolded state shown in FIG. 18a to the folded state shown in FIG. 18b, the second middle frame 2 approaches the first middle frame 1 and generates the second displacement H2. When the foldable apparatus 10 is folded from the folded state shown in FIG. 18b to the unfolded state shown in FIG. 18a, the second middle frame 2 is away from the first middle frame 1 and generates the second displacement H2.

Refer to FIG. 18a and FIG. 18b. A process in which the foldable apparatus 10 is folded from the unfolded state shown in FIG. 18a to the folded state shown in FIG. 18b is described.

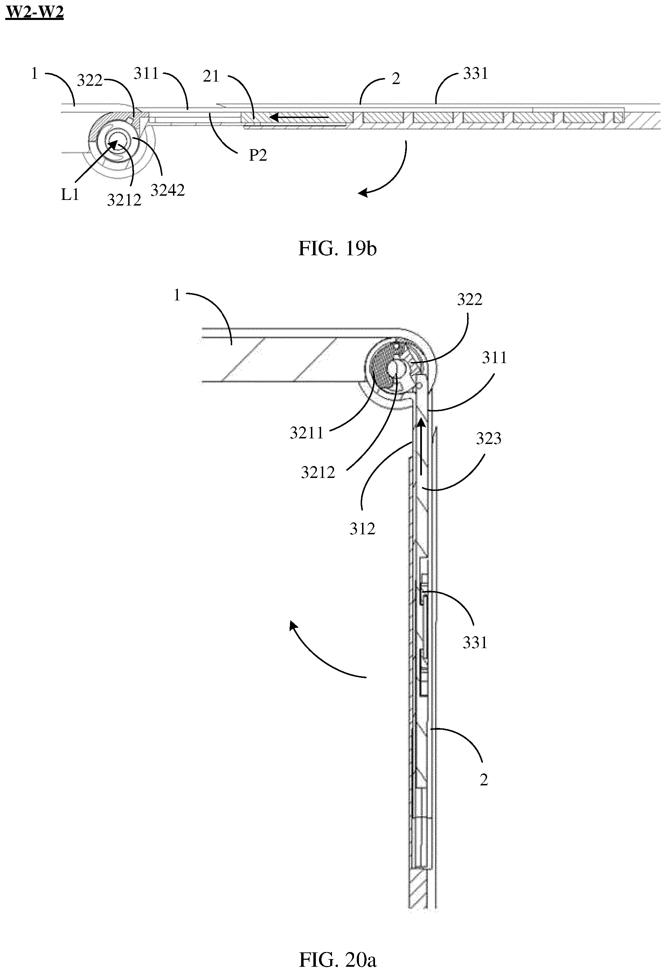

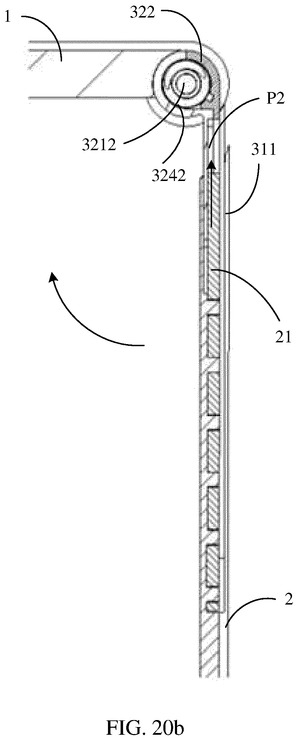

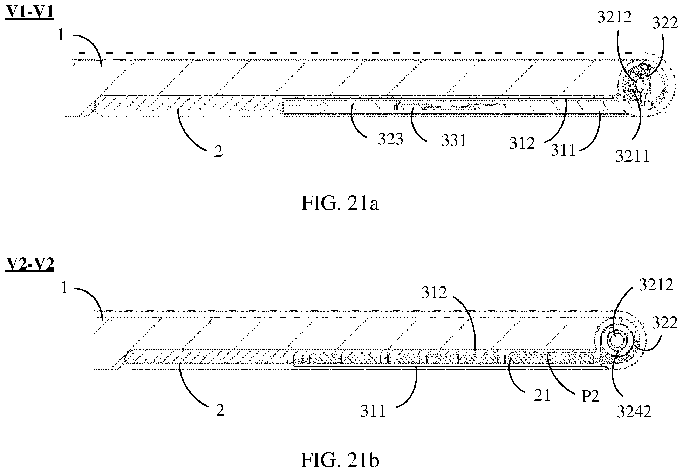

FIG. 19a is a sectional structure of the foldable apparatus 10 on a plane on which W1-W1 in FIG. 18a is located, and FIG. 19b is a sectional structure of the foldable apparatus 10 on a plane on which W2-W2 in FIG. 18a is located. FIG. 20a is a sectional structure in which the second middle frame 2 rotates by 90° relative to the first middle frame 1 in the foldable apparatus 10 on the plane on which W1-W1 in FIG. 18a is located, and FIG. 20b is a sectional structure in which the second middle frame 2 rotates by 90° relative to the first middle frame 1 in the foldable apparatus 10 on the plane on which W2-W2 in FIG. 19a is located. FIG. 21a is a sectional structure of the foldable apparatus 10 on a plane on which V1-V1 in FIG. 18b is located, and FIG. 21b is a sectional structure of the foldable apparatus 10 on a plane on which V2-V2 in FIG. 18b is located.

In FIG. 19a, the surface that is of the first middle frame 1 and that is configured to carry the flexible display 20 keeps aligned with the surface that is of the second middle frame 2 and that is configured to carry the flexible display 20. When the first support plate 311 and the second support plate 312 rotate clockwise around the first axis L1, the drive connecting rod 322 rotates clockwise around the second axis L2, and the drive sliding block 323 rotates clockwise around the third axis L3. In addition, the drive sliding block 323 slides in the drive sliding groove P1 in the direction close to the first middle frame 1. The drive sliding block 323 drives the stroke amplification gear 331 to slide in the direction close to the first middle frame 1, and the stroke amplification gear 331 rotates around the fourth axis L4. With reference to FIG. 19b, the stroke amplification gear 331 drives the middle frame sliding block 21 to slide in the direction close to the first middle frame 1 in the middle frame sliding groove P2. When the first support plate 311 and the second support plate 312 rotate clockwise by 90° around the first axis L1, the foldable apparatus 10 shown inFIG. 19a is changed to that shown in FIG. 20a, and the foldable apparatus 10 shown in FIG. 19b is changed to that shown in FIG. 20b. When the first support plate 311 and the second support plate 312 continue to rotate clockwise by 90° around the first axis L1, structures shown in FIG. 21a and FIG. 21b may be obtained. In FIG. 21a and FIG. 21b, the surface that is of the second middle frame 2 and that is configured to carry the flexible display 20 is parallel to the surface that is of the first middle frame 1 and that is configured to carry the flexible display 20. The foldable apparatus 10 is folded from the unfolded state shown in FIG. 18a to the folded state shown in FIG. 18a, and the second middle frame 2 rotates by 180° relative to the first middle frame 1. In addition, the second middle frame 2 approaches the first axis L1 and generates the second displacement H2.

With reference to the motion examples of the drive sliding block 323 shown in FIG. 16a to FIG. 16c and the motion examples of the stroke amplification gear 331 shown in FIG. 18a and FIG. 18b, when the foldable apparatus 10 switches between the unfolded state and the folded state, a position of the second middle frame 2 relative to the first middle frame 1 may be adjusted, to change a distance between a support point at which the first middle frame 1 supports the flexible display 20 and a support point at which the second middle frame 2 supports the flexible display 20, so that the foldable apparatus 10 can always provide good support for the flexible display 20, and a flatness requirement of the flexible display 20 in unfolding and folding processes is met. The foldable structure 3 adjusts only the second middle frame 2, so that asymmetric folding between the first middle frame 1 and the second middle frame 2 is implemented. A structure used to implement folding is simpler, and this helps reduce costs.

It should be understood that, in a process in which the first support plate 311 rotates around the first axis L1 relative to the first middle frame 1, the first support part 311 also drives the damping sliding block 3242 to rotate around the first axis L1. This is reflected in FIG. 19b, FIG. 20b, and FIG. 21b.

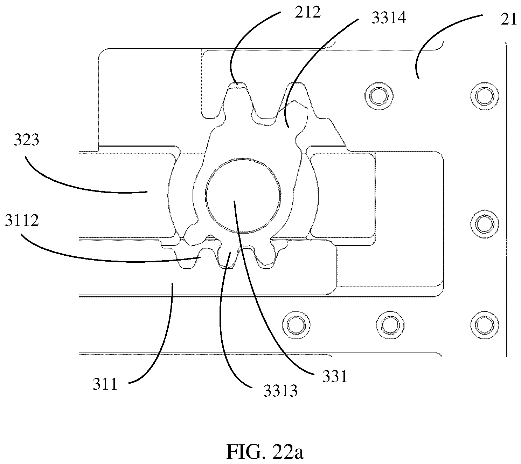

In some embodiments, as shown in FIG. 22a, the first transmission end R1 of the stroke amplification gear 331 is, for example, a second tooth part 3313, and the second transmission end R2 is, for example, a third tooth part 3314. Correspondingly, a second rack 3112 is disposed on the first support plate 311, and the second tooth part 3313 is meshed with the second rack 3112. A third rack 212 is disposed on the middle frame sliding block 21, and the third tooth part 3314 is meshed with the third rack 212.

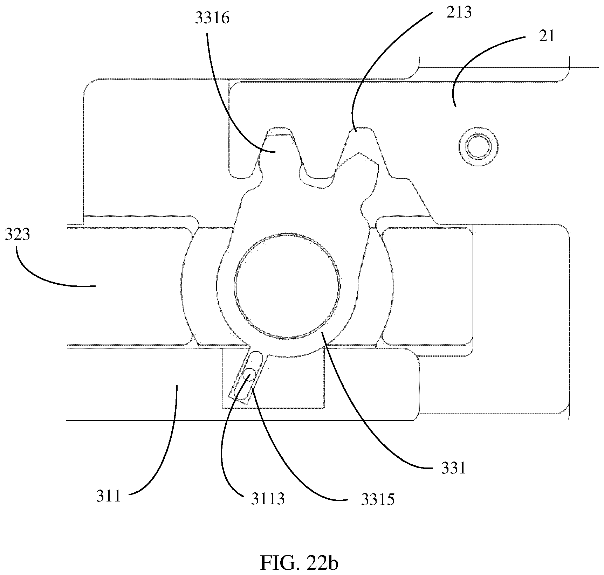

In some embodiments, as shown in FIG. 22b, the first transmission end R1 of the stroke amplification gear 331 is, for example, a second sliding groove 3315, and the second transmission end R2 is, for example, a fourth tooth part 3316. Correspondingly, a second sliding rod 3113 is disposed on the first support plate 311, and the second sliding rod 3113 slidably fits the second sliding groove 3315. A fourth rack 213 is disposed on the middle frame sliding block 21, and the fourth tooth part 3316 is meshed with the fourth rack 213.

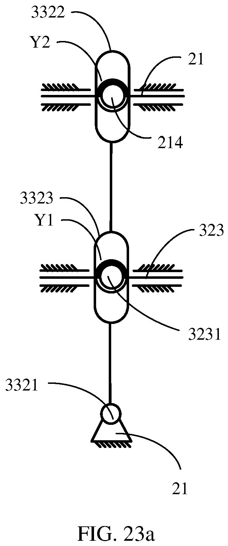

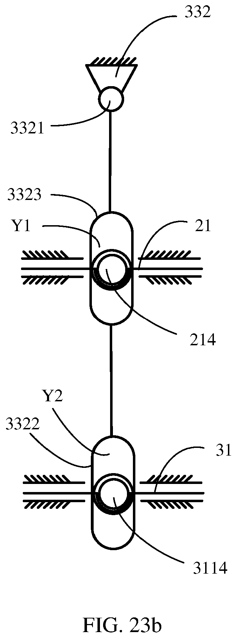

The stroke control mechanism 33 may alternatively be implemented in another manner. As shown in FIG. 23a and FIG. 23b, in some embodiments, the stroke control mechanism 33 is a stroke amplification lever 332. In a length direction of the stroke amplification lever 332, the stroke amplification lever 332 has a first end part 3321, a second end part 3322, and a middle part 3323 located between the first end part 3321 and the second end part 3322. A first lever sliding groove Y1 is disposed at the middle part 3323, a second lever sliding groove Y2 is disposed at the second end part 3322, and a drive sliding part 3231 that rotatably and slidably fits the first lever sliding groove Y1 is disposed on the drive sliding block 323. It should be understood that the drive sliding part 3231 rotatably and slidably fits the first lever sliding groove Y1 means that the drive sliding part 3231 is rotatable relative to the first lever sliding groove Y1 and is also slidable in the first lever sliding groove Y1.

In the stroke amplification lever 332 shown in FIG. 23a, the first end part 3321 is hinged to the support plate mechanism 31, and may be specifically hinged to the first support plate 311. A middle frame sliding part 214 is disposed on the middle frame sliding block 21, and the middle frame sliding part 214 can rotatably and slidably fit the second lever sliding groove Y2 of the second end part 3322. It should be understood that the middle frame sliding part 214 rotatably and slidably fits the second lever sliding groove Y2 means that the middle frame sliding part 214 is rotatable relative to the second lever sliding groove Y2 and is also slidable in the second lever sliding groove Y2. A distance between the first end part 3321 and the drive sliding part 3231 is less than a distance between the drive sliding part 3231 and the middle frame sliding part 214. When the drive sliding block 323 slides relative to the support plate mechanism 31 to generate the first displacement H1, the drive sliding part 3231 rotates and slides in the first lever sliding groove Y1. The stroke amplification lever 332 rotates, to drive the second end part 3322 to rotate around the drive sliding part 3231, and further drive the middle frame sliding block 21 to generate the second displacement H2 relative to the first support plate 311. The second displacement H2 is greater than the first displacement H1.

In the stroke amplification lever 332 shown in FIG. 23b, the first end part 3321 is hinged to the middle frame sliding block 21. A support sliding part 3114 is disposed on the support plate mechanism 31, and the support sliding part 3114 can rotatably and slidably fit the second lever sliding groove Y2 of the second end part 3322. It should be understood that the support sliding part 3114 rotatably and slidably fits the second lever sliding groove Y2 means that the support sliding part 3114 is rotatable relative to the second lever sliding groove Y2 and is also slidable in the second lever sliding groove Y2. The distance between the first end part 3321 and the drive sliding part 3231 is greater than the distance between the drive sliding part 3231 and the middle frame sliding part 214. When the drive sliding block 323 slides relative to the support plate mechanism 31 to generate the first displacement H1, the drive sliding part 3231 rotates and slides in the first lever sliding groove Y1. The stroke amplification lever 332 rotates, to drive the second end part 3322 to rotate around the drive sliding part 3231, and further drive the middle frame sliding block 21 to generate the second displacement H2 relative to the first support plate 311. The second displacement H2 is greater than the first displacement H1.

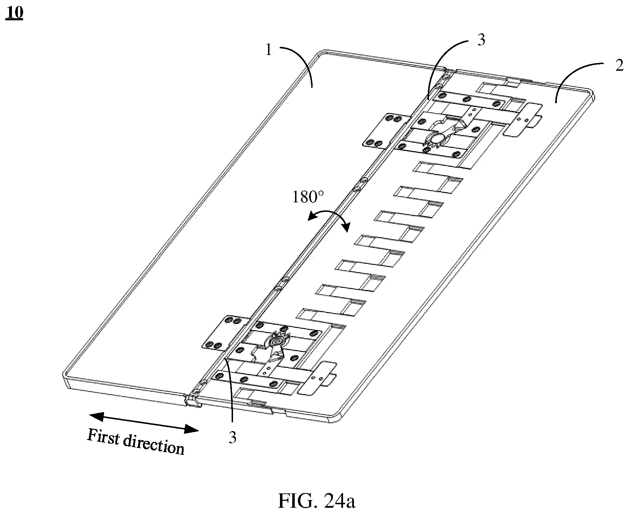

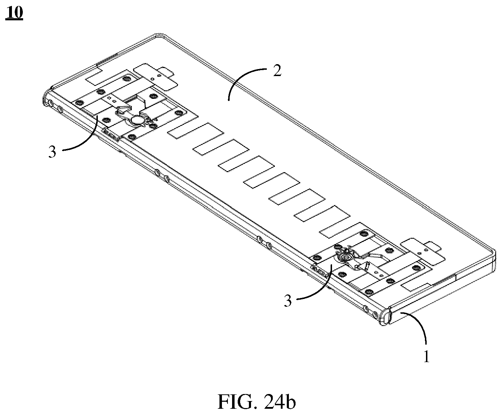

In another embodiment provided in this application, as shown in FIG. 24a and FIG. 24b, a foldable apparatus 10 includes a first middle frame 1, a second middle frame 2, and a foldable structure 3 disposed between the first middle frame 1 and the second middle frame 2, and two foldable structures 3 are disposed. FIG. 24a is a diagram of a structure of the foldable apparatus 10 when a terminal device 100 is in a first state. The first middle frame 1 keeps aligned with the second middle frame 2, and a surface that is of the first middle frame 1 and that is configured to carry the flexible display 20 and a surface that is of the second middle frame 2 and that is configured to carry the flexible display 20 are equivalent to 180°. When the second middle frame 2 rotates and is folded relative to the first middle frame 1 until a surface that is of the second middle frame 2 and that is away from the flexible display 20 is attached to a surface that is of the first middle frame 1 and that is away from the flexible display 20, a structure of the foldable apparatus 10 is shown in FIG. 24b.

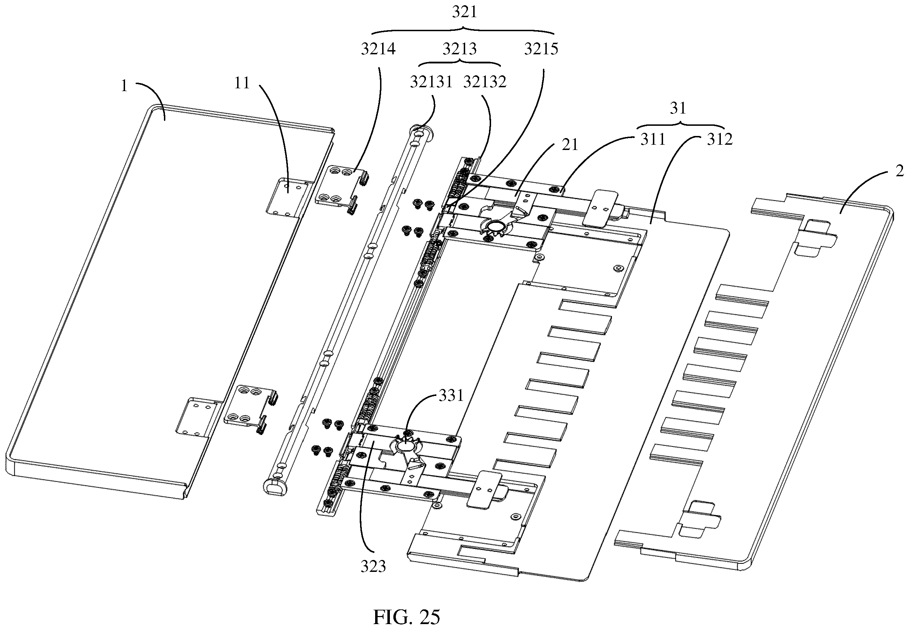

FIG. 25 is an exploded view of the foldable apparatus 10. Two foldable structures 3 are disposed between the first middle frame 1 and the second middle frame 2, and each foldable structure 3 specifically includes a support plate mechanism 31, a hinge mechanism 32, and a stroke control mechanism 33. The support plate mechanism 31 includes a first support plate 311 and a second support plate 312, and the first support plate 311 and the second support plate 312 are fastened through snap-fitting up and down. The hinge mechanism 32 includes a fastening component 321, a drive connecting rod 322, a drive sliding block 323, and a damping component 324. A middle frame sliding block 21 is disposed on the second middle frame 2, and the middle frame sliding block 21 is fastened to the second middle frame 2. The stroke control mechanism 33 is in transmission connection between the middle frame sliding block 21 and the support plate mechanism 31. Structures of the drive connecting rod 322, the drive sliding block 323, and the stroke control mechanism 33 are similar to the structures in the embodiment shown in FIG. 5a. Details are not described again.

Still refer to FIG. 25. A fastening groove 11 is disposed on a side that is of the first middle frame 1 and that faces the foldable structure 3, and the fastening component 321 may be fastened to the fastening groove 11. The fastening component 321 includes a connection substrate 3213, a connection plate 3214, and a first connection rotating shaft 3215. The connection plate 3214 can be fastened to the fastening groove 11 by using screws. The connection substrate 3213 is located between the first middle frame 1 and the second middle frame 2, and includes a first base 32131 and a second base 32132. The two foldable structures 3 in FIG. 25 may share one fastening component 321.

In the following embodiments, specific structures of one foldable structure 3 are used for description. It should be understood that the specific structures in the foldable structure 3 below are structures in a same foldable structure 3.

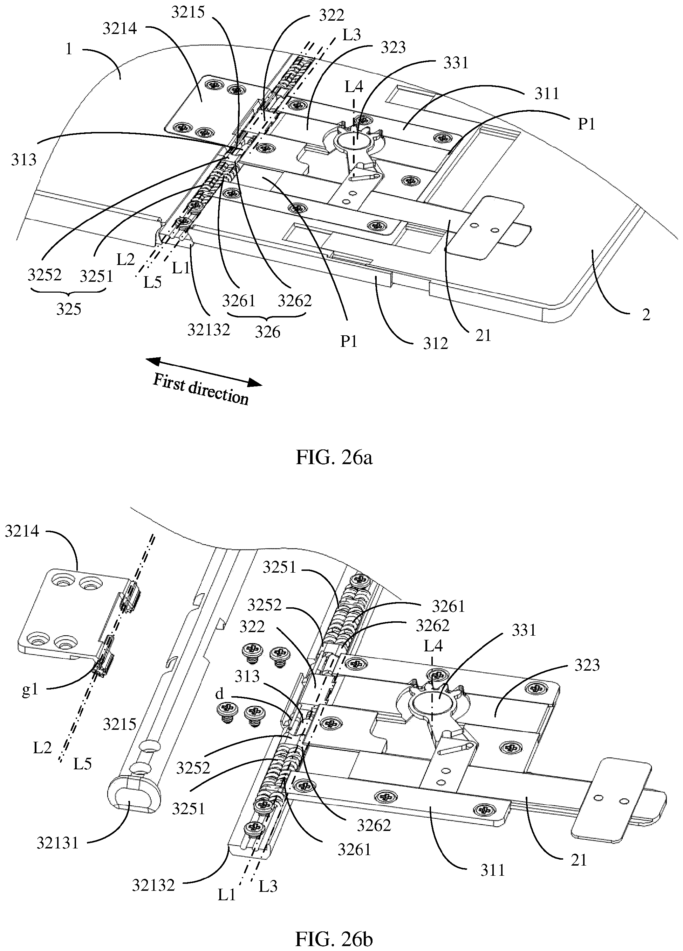

FIG. 26a shows a partial structure of the foldable apparatus 10, and the partial structure shows one of the foldable structures 3. For ease of showing a structure of the foldable structure 3, the first base 32131 is hidden herein. Refer to FIG. 25. The connection plate 3214 is fastened to the first middle frame 1, the drive connecting rod 322 is mounted on the connection plate 3214 and rotatable around a second axis L2, and the drive sliding block 323 is mounted on the drive connecting rod 322 and rotatable around a third axis L3. The support plate mechanism 31 is mounted between the first base 32131 and the second base 32132 and rotatable around a first axis L1, and the support plate mechanism 31 is rotatable around the first axis L1 relative to the connection substrate 3213. It should be understood that the connection plate 3214 is fastened relative to the first middle frame 1, and the first connection rotating shaft 3215 is also fastened relative to the first middle frame 1 via the connection plate 3214. In this case, the connection substrate 3213 including the first base 32131 and the second base 32132 rotates around a fifth axis L5 relative to the first middle frame 1, that is, a position of the first axis L1 relative to the first middle frame 1 changes with folding and unfolding of the foldable structure 3.

The drive sliding block 323 can slidably fit the drive sliding groove P1 on the first support plate 311 in the support plate mechanism 31, and the middle frame sliding block 21 can slidably fit the middle frame sliding groove P2 on the first support plate 311. The drive sliding block 323 can slidably fit the first support plate 311 in the support plate mechanism 31.

In a process in which the second middle frame 2 rotates relative to the first middle frame 1, the drive sliding block 323, the support plate mechanism 31, and the second middle frame 2 are equivalently located on a same plane. When the support plate mechanism 31 rotates around the first axis L1 relative to the first middle frame 1, the drive sliding block 323 and the second middle frame 2 also rotate around the first axis L1 relative to the first middle frame 1. For example, the stroke control mechanism 33 includes a stroke amplification gear 331, the stroke amplification gear 331 is mounted on the drive sliding block 323 and rotatable around a fourth axis L4, and an axis of the stroke amplification gear 331 is coaxial with the fourth axis L4.

The first axis L1, the second axis L2, and the third axis L3 are always parallel to each other, a position of the second axis L2 is fixed in a motion process of the foldable structure 3, and positions of the first axis L1 and the third axis L3 change with rotation of the drive connecting rod 322 around the second axis L2. The fourth axis L4 is perpendicular to the first axis L1 and a first direction, and the fourth axis L4 is also perpendicular to the second axis L2 and the third axis L3.

Still refer to FIG. 26a. The connection plate 3214 is fastened to the first connection rotating shaft 3215, and the first connection rotating shaft 3215 is mounted between the first base 32131 and the second base 32132 and rotatable around the fifth axis L5. The fifth axis L5 herein is parallel to the first axis L1. A second connection rotating shaft 313 is disposed on a side that is of the first support plate 311 and that faces the first middle frame 1, and the second connection rotating shaft 313 is mounted between the first base 32131 and the second base 32132 and rotatable around the first axis L1.

A first damping unit 325 is disposed between the first connection rotating shaft 3215 and the connection substrate 3213, and a second damping unit 326 is disposed between the second connection rotating shaft 313 and the connection substrate 3213. The first damping unit 325 includes a first spring 3251 and a first sliding block 3252, the first sliding block 3252 is mounted on the connection substrate 3213 and movable in an extension direction of the fifth axis L5, and the first sliding block 3252 and the first connection rotating shaft 3215 are cam-fitted. The cam fit herein may be a fit structure between the cam surface j1 and the wave-shaped surface j2 shown in FIG. 15. When the first connection rotating shaft 3215 rotates around the fifth axis L5, the first sliding block 3252 is movable in the extension direction of the fifth axis L5. The first spring 3251 is disposed between the first sliding block 3252 and the connection substrate 3213, to provide restoring force for the first sliding block 3252 when the first sliding block 3252 moves in the extension direction of the fifth axis L5 and compresses the first spring 3251.

The second damping unit 326 includes a second spring 3261 and a second sliding block 3262, the second sliding block 3262 is mounted on the connection substrate 3213 and movable in an extension direction of the first axis L1, and the second sliding block 3262 and the second connection rotating shaft 313 are cam-fitted. The cam fit herein may be a fit structure between the cam surface j1 and the wave-shaped surface j2 shown in FIG. 15. When the second connection rotating shaft 313 rotates around the first axis L1, the second sliding block 3262 is movable in the extension direction of the first axis L1. The second spring 3261 is disposed between the second sliding block 3262 and the connection substrate 3213, to provide restoring force for the second sliding block 3262 when the second sliding block 3262 moves in the extension direction of the first axis L1 and compresses the second spring 3261.

In the structure shown in FIG. 26a, in the first direction, the first connection rotating shaft 3215 and the second connection rotating shaft 313 are disposed side by side between the first base 32131 and the second base 32132, the first damping unit 325 and the second damping unit 326 are also disposed side by side, and the first sliding block 3252 and the second sliding block 3262 may be of an integrated structure.

With reference to FIG. 26a, refer to an exploded view of the foldable structure 3 between the first middle frame 1 and the second middle frame 2 shown in FIG. 26b. The first connection rotating shaft 3215 and the second connection rotating shaft 313 are disposed in parallel between the first base 32131 and the second base 32132, and the first damping unit 325 and the second damping unit 326 are disposed in parallel between the first base 32131 and the second base 32132. The drive connecting rod 322 is hinged to the first connection rotating shaft 3215 via a first pin shaft d, and the first support plate 311 is hinged to the connection substrate 3213 via the second connection rotating shaft 313.

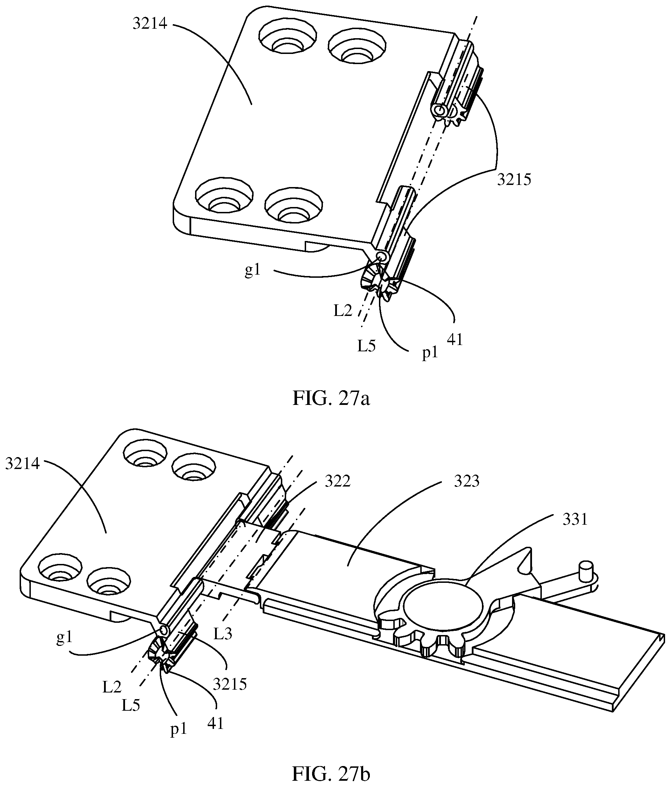

With reference to FIG. 26b, refer to a structure of the connection plate 3214 shown in FIG. 27a. The connection plate 3214 is plate-shaped and can be fastened to the first middle frame 1 by using the screws. The first connection rotating shaft 3215 is fastened to a side away from the first middle frame 1, and a first pin hole g1 is disposed on the connection plate 3214 at an end that is of the connection plate 3214 and that faces the first connection rotating shaft 3215, and an axis of the first pin hole g1 is collinear with the second axis L2. The first connection rotating shaft 3215 has a first shaft hole p1, and the first shaft hole p1 is collinear with the fifth axis L5. As shown in FIG. 26b, each connection plate 3214 is connected to two first connection rotating shafts 3215, and each first connection rotating shaft 3215 corresponds to one second connection rotating shaft 313, one group of first damping units 325, and one group of second damping units 326. The two first connection rotating shafts 3215 are symmetrical with each other relative to the connection plate 3214 in the extension direction of the first axis L1. The two second connection rotating shafts 313, two groups of first damping units 325, and two groups of second damping units 326 are also symmetrical with each other relative to the connection plate 3214 in the extension direction of the first axis L1.

As shown in FIG. 27b, a second pin hole g2 on the drive connecting rod 322 can coaxially fit the first pin hole g1, and the two are hinged via the first pin shaft d, so that the drive connecting rod 322 is rotatable around the second axis L2 relative to the connection plate 3214. Structures of the second pin hole g2 and the first pin shaft d on the drive connecting rod 322 are similar to the structures in FIG. 5b. Details are not described herein again.

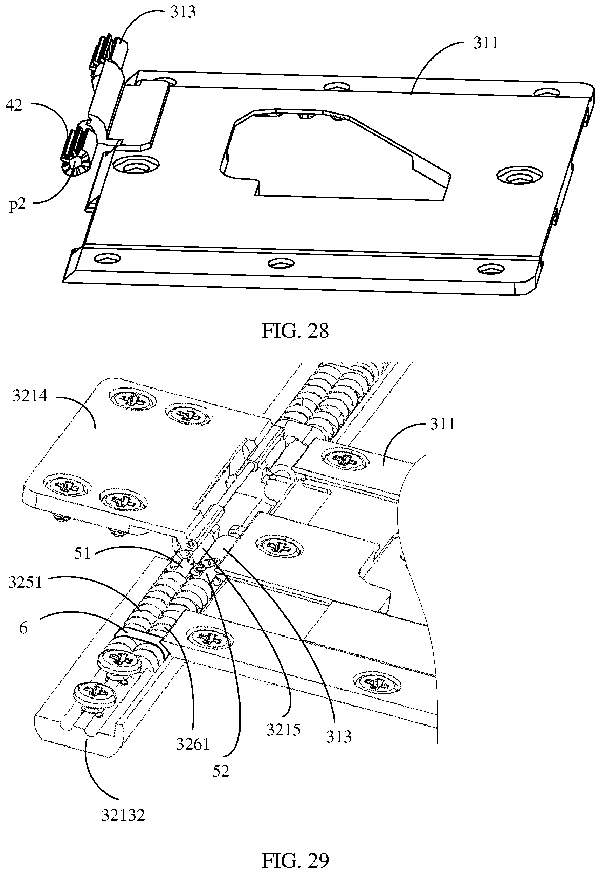

FIG. 28 shows structures of the first support plate 311 and the second connection rotating shaft 313. The second connection rotating shaft 313 is fastened to the first support plate 311. The second connection rotating shaft 313 has a second shaft hole p2. When the first support plate 311 is mounted on the connection substrate 3213, the second shaft hole p2 is collinear with the first axis L1.

With reference to FIG. 26b, FIG. 27a, and FIG. 28, the first connection rotating shaft 3215 and the second connection rotating shaft 313 are disposed side by side between the first base 32131 and the second base 32132, a first meshing tooth 41 is disposed on an outer peripheral surface of the first connection rotating shaft 3215, a second meshing tooth 42 is disposed on an outer peripheral surface of the second connection rotating shaft 313, and the first meshing tooth 41 can be meshed with the second meshing tooth 42, as shown in FIG. 29.

Still refer to FIG. 29. To display a meshing structure between the first connection rotating shaft 3215 and the second connection rotating shaft 313, the first sliding block 3252 and the second sliding block 3262 are hidden herein. The first connection rotating shaft 3215 is hinged to the connection substrate 3213 via a first central shaft 51, the first central shaft 51 is fastened to the second base 32132 by using a screw, and the first shaft hole p1 on the first connection rotating shaft 3215 rotatably fits the first central shaft 51. The first spring 3251 and the first sliding block 3252 in the first damping unit 325 are sleeved on the first central shaft 51 and movable in the fifth axis L5. Correspondingly, the second connection rotating shaft 313 is hinged to the connection substrate 3213 via a second central shaft 52, the second central shaft 52 is also fastened to the second base 32132 by using a screw, and the second shaft hole p2 on the second connection rotating shaft 313 rotatably fits the second central shaft 52. The second spring 3261 and the second sliding block 3262 in the second damping unit 326 are sleeved on the second central shaft 52 and movable in the first axis L1. Herein, the first central shaft 51 and the second central shaft 52 may simultaneously be fastened to the second base 32132 by using a group of screws. The first sliding block 3252 and the second sliding block 3262 are of the integrated structure, and the first spring 3251 and the second spring 3261 are further fastened to the second base 32132 via a fastening member 6.

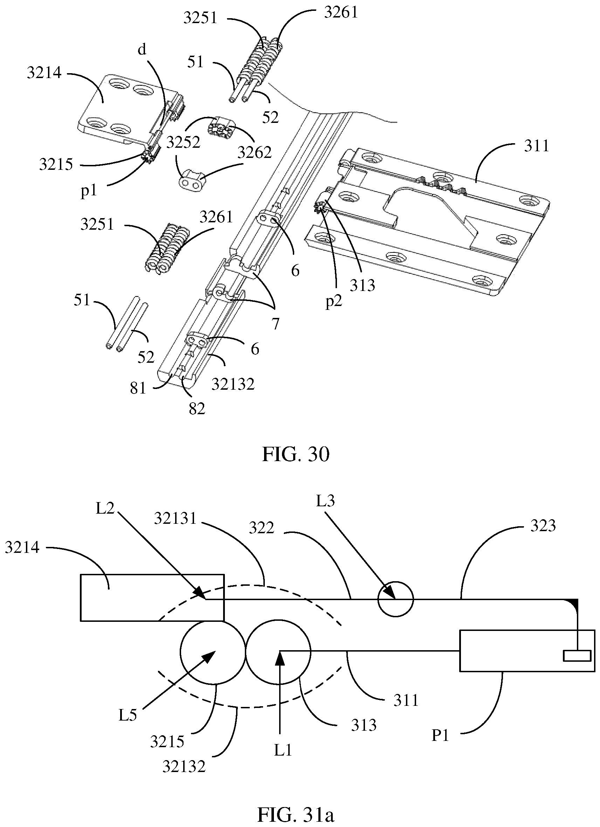

FIG. 30 is an exploded view of the connection plate 3214, the first support plate 311, and the second base 32132. Two groups of first connection rotating shafts 3215 are disposed on the connection plate 3214. Correspondingly, two groups of first damping units 325 are disposed between the connection plate 3214 and the second base 32132. Two groups of second connection rotating shafts 313 are disposed on the first support plate 311. Correspondingly, two groups of second damping units 326 are disposed between the first support plate 311 and the second base 32132. A first spring 3251 in one group of first damping units 325 is sleeved on a corresponding first central shaft 51, and a first spring 3251 in the other group of first damping units 325 is separated from a corresponding first central shaft 51. A second spring 3261 in one group of second damping units 326 is sleeved on a corresponding second central shaft 52, and a first spring 3261 in the other group of second damping units 326 is separated from a corresponding second central shaft 52.

A group of the first connection rotating shaft 3215, the second connection rotating shaft 313, the first damping unit 325, and the second damping unit 326 that correspond to each other is used as an example. During mounting, the first central shaft 51 and the second central shaft 52 are respectively and correspondingly fastened to a first shaft groove 81 and a second shaft groove 82 on the second base 32132 in a manner of being parallel to each other. The first central shaft 51 rotatably fits the first shaft hole p1 on the first connection rotating shaft 3215, and the second central shaft 52 rotatably fits the second shaft hole p2 on the second connection rotating shaft 313. The first spring 3251 and the first sliding block 3252 are sleeved on the first central shaft 51, and the first sliding block 3252 is located between the first spring 3251 and the first connection rotating shaft 3215. The first connection rotating shaft 3215 and the first sliding block 3252 are cam-fitted, that is, when the first connection rotating shaft 3215 rotates around the first central shaft 51, the first connection rotating shaft 3215 can push the first sliding block 3252 to move toward the first spring 3251 in an axial direction of the first central shaft 51, to compress the first spring 3251. The first spring 3251 deforms to generate elastic potential energy, and the elastic potential energy may provide restoring force for the first sliding block 3252 with a tendency to drive the first sliding block 3252 to reset. The first sliding block 3252 further transfers the force to the first connection rotating shaft 3215, so that the first connection rotating shaft 3215 tends to reset. The second spring 3261 and the second sliding block 3262 are sleeved on the second central shaft 52, and the second sliding block 3262 is located between the second spring 3261 and the second connection rotating shaft 313. The second connection rotating shaft 313 and the second sliding block 3262 are cam-fitted, that is, when the second connection rotating shaft 313 rotates around the second central shaft 52, the second connection rotating shaft 313 can push the second sliding block 3262 to move toward the second spring 3261 in an axial direction of the second central shaft 52, to compress the second spring 3261. The second spring 3261 deforms to generate the elastic potential energy, and the elastic potential energy may provide restoring force for the second sliding block 3262 with the tendency to drive the second sliding block 3262 to reset. The second sliding block 3262 further transfers the force to the second connection rotating shaft 313, so that the second connection rotating shaft 313 tends to reset. In a process in which the foldable structure 3 is folded or unfolded, the first connection rotating shaft 3215 and the second connection rotating shaft 313 can simultaneously rotate reversely, the first sliding block 3252 and the second sliding block 3262 move consistently, and the first sliding block 3252 and the second sliding block 3262 may be made into the integrated structure.

Still refer to FIG. 30. The fastening member 6 and a side baffle 7 are further disposed on the second base 32132, and a side that is of each first connection rotating shaft 3215 and that is away from the first sliding block 3252 abuts against one side baffle 7. Two side baffles 7 can position two first connection rotating shafts 3215. Each group of the first spring 3251 and the second spring 3261 may be fastened via a same fastening member 6, and through holes for the first central shaft 51 and the second central shaft 52 to penetrate are disposed on the fastening member 6.

With reference to the foregoing embodiments, the structures of the support plate mechanism 31 and the hinge mechanism 32 may be simplified into simplified diagrams of transmission structures shown in FIG. 31a to FIG. 31c. FIG. 31a shows the foldable apparatus 10 in an unfolded state. The connection plate 3214 is fastened to the first middle frame 1, and a first end of the drive connecting rod 322 is mounted on the connection plate 3214 and rotatable around the second axis L2. A first end of the drive sliding block 323 is mounted at a second end of the drive connection 322 and rotatable around the third axis L3, and a second end of the drive sliding block 323 slidably fits the drive sliding groove P1 of the first support plate 311. The first support plate 311, the drive connecting rod 322, and the drive sliding block 323 are equivalent to forming a composite structure of a crank slider mechanism and a crank guide rod structure. The first connection rotating shaft 3215 is fastened to the connection plate 3214, and the first connection rotating shaft 3215 is mounted between the first base 32131 and the second base 32132 and rotatable around the fifth axis L5. The first base 32131 and the second base 32132 herein are shown by using dashed lines. The second connection rotating shaft 313 is fastened to the first support plate 311, and the second connection rotating shaft 313 is mounted between the first base 32131 and the second base 32132 and rotatable around the first axis L1.

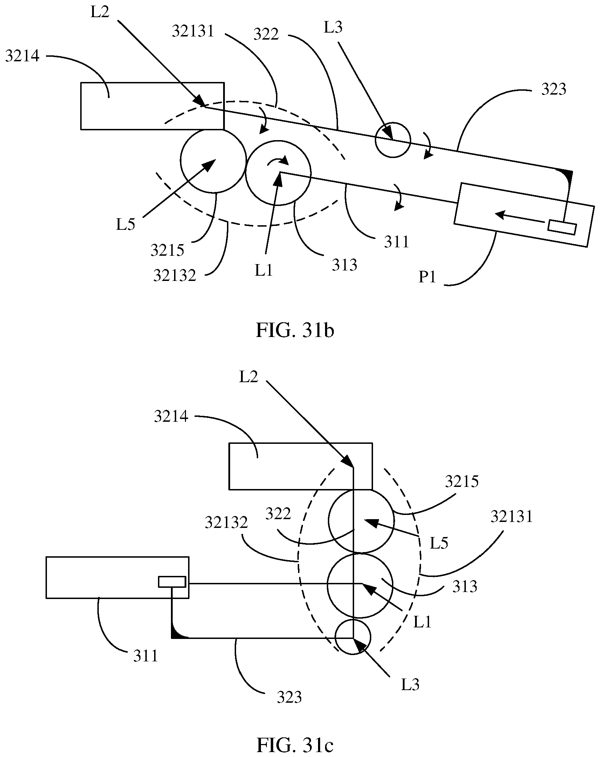

As shown in FIG. 31b, when the first support plate 311 rotates around the first axis L1, the drive sliding block 323 may be driven to rotate around the third axis L3 and slide in the drive sliding groove P1 in a direction close to the first axis L1, and the drive connecting rod 322 may be driven to rotate around the second axis L2. The second connection rotating shaft 313 rotates around the fifth axis L5 relative to the first connection rotating shaft 3215, to drive the first base 32131 and the second base 32132 to rotate around the fifth axis L5.

FIG. 31c shows a folded state of the foldable apparatus 10. Compared with FIG. 31a, the first support plate 311 rotates clockwise by 180°, the drive sliding block 323 slides from an end that is of the drive sliding groove P1 and that is away from the first axis L1 to an end close to the first axis L1. The second connection rotating shaft 313 rotates clockwise by 90° relative to the first connection rotating shaft 3215, and the first base 32131 and the second base 32132 also rotate clockwise by 90° relative to the first connection rotating shaft 3215.

It may be deduced backward that when the foldable apparatus 10 gradually unfolds from the folded state shown in FIG. 31c to the unfolded state shown in FIG. 31a, the drive sliding block 323 slides from the end that is of the drive sliding groove P1 and that is close to the first axis L1 to the end away from the first axis L1.

With reference to the diagrams in FIG. 31a to FIG. 31c, it can be learned that, based on the structures of the first connection rotating shaft 3215 and the second connection rotating shaft 313, when the foldable apparatus 10 is in the unfolded state, a size of the foldable structure 3 in a thickness direction of the foldable apparatus 10 may be reduced. When the foldable apparatus 10 is in the folded state, a size of the foldable structure 3 in a width direction of the foldable apparatus 10 may be reduced. The foldable apparatus 10 is used in the terminal device 100, to help implement miniaturization of the device.

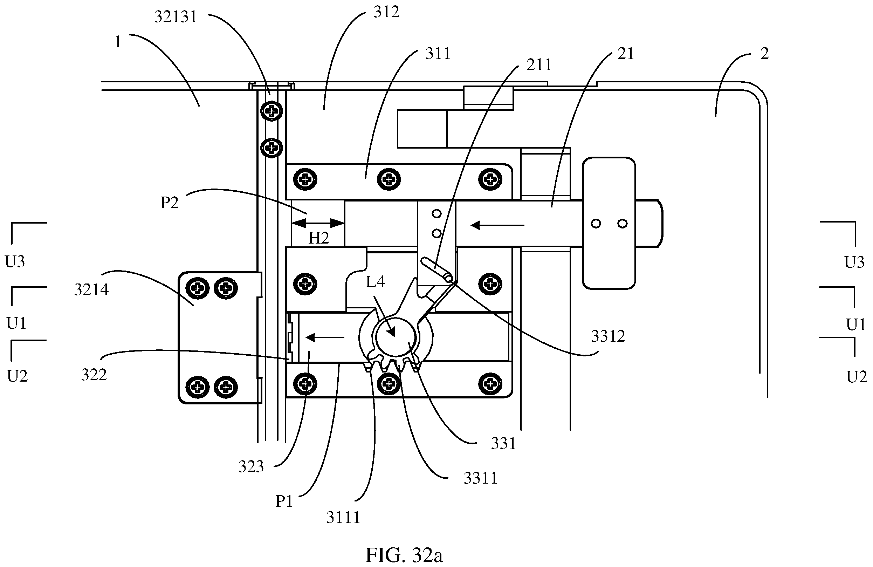

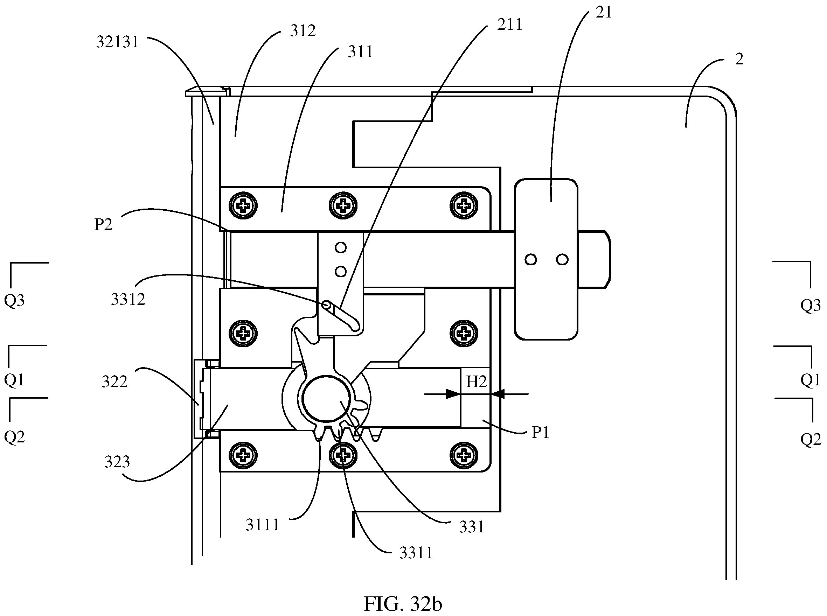

Refer to the foldable apparatus 10 shown in FIG. 32a and FIG. 32b. The drive sliding block 323 slidably fits the drive sliding groove P1 on the first support plate 311, and the middle frame sliding block 21 slidably fits the middle frame sliding groove P2 on the first support plate 311. The stroke amplification gear 331 is mounted on the drive sliding block 323 and rotatable around the fourth axis L4, and the stroke amplification gear 331 is in transmission connection between the first support plate 311 and the middle frame sliding groove 332. In the stroke amplification gear 331, the first transmission end R1 is, for example, a first tooth part 3311, and the second transmission end R2 is, for example, a first sliding rod 3312. Correspondingly, a first rack 3111 is disposed on the first support plate 311, and the first tooth part 3311 is meshed with the first rack 3111. A first sliding groove 211 is disposed on the middle frame sliding block 21, and the first sliding rod 3312 slidably fits the first sliding groove 211.

FIG. 32a is a diagram of the foldable apparatus 10 in the unfolded state. A distance between a side that is of the middle frame sliding block 21 and that faces the first middle frame 1 and a side that is of the middle frame sliding groove P2 and that is close to the first middle frame 1 is first displacement H1. When the foldable apparatus 10 is folded from the unfolded state shown in FIG. 32a to the folded state shown in FIG. 32b, the drive sliding block 323 slides relative to the first support plate 311 in a direction close to the first middle frame 1, to generate the first displacement H1. Due to meshing transmission between the first tooth part 3311 and the first rack 3111, the stroke amplification gear 331 rotates clockwise. The first sliding rod 3312 rotates counterclockwise accordingly, and the first sliding rod 3312 slides in the first sliding groove 211 from an end that is of the first sliding groove 211 and that faces the second middle frame 2 to an end away from the second middle frame 2. Further, the middle frame sliding block 21 is driven to slide relative to the first support plate 311 in the direction close to the first middle frame 1, to generate second displacement H2. A linear speed of the first tooth part 3311 used as the first transmission end R1 is less than a linear speed of the first sliding rod 3312 used as the second transmission end R2. Therefore, the first displacement H1 is less than the second displacement H2. The stroke amplification gear 331 amplifies displacement of the drive sliding block 323 relative to the first support plate 311 to displacement of the middle frame sliding block 21 relative to the first support plate 311. Because the middle frame sliding block 21 is fastened to the second middle frame 2, when the foldable apparatus 10 is folded from the unfolded state shown in FIG. 32a to the folded state shown in FIG. 32b, the second middle frame 2 approaches the first middle frame 1 and generates the second displacement H2. When the foldable apparatus 10 is folded from the folded state shown in FIG. 32b to the unfolded state shown in FIG. 32a, the second middle frame 2 is away from the first middle frame 1 and generates the second displacement H2.

Refer to FIG. 32a and FIG. 32b. A process in which the foldable apparatus 10 is folded from the unfolded state shown in FIG. 32a to the folded state shown in FIG. 32b is described.

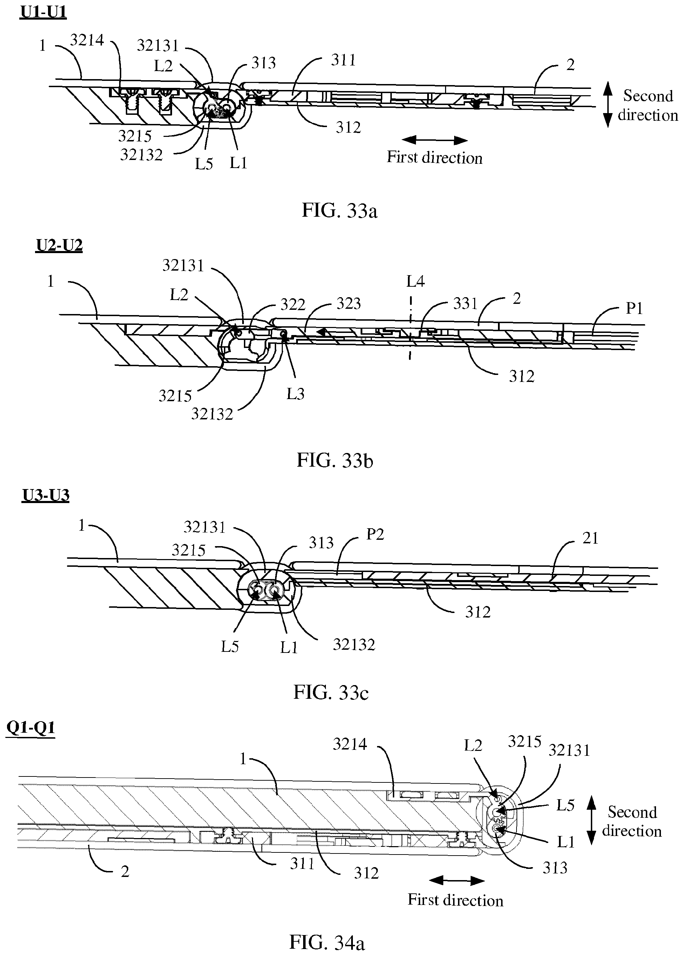

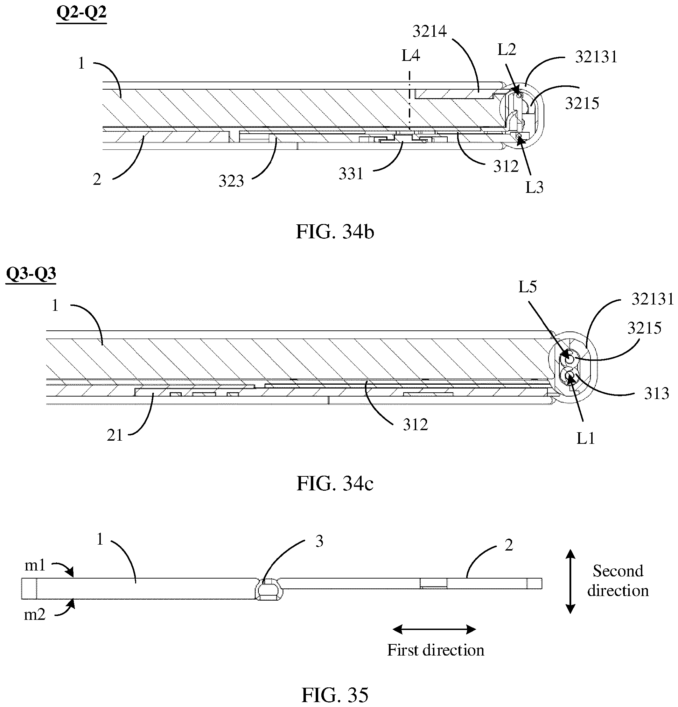

FIG. 33a is a sectional structure of the foldable apparatus 10 on a plane on which U1-U1 in FIG. 32a is located, FIG. 33b is a sectional structure of the foldable apparatus 10 on a plane on which U2-U2 in FIG. 32a is located, and FIG. 33c is a sectional structure of the foldable apparatus 10 on a plane on which U3-U3 in FIG. 32a is located. FIG. 34a is a sectional structure of the foldable apparatus 10 on a plane on which Q1-Q1 in FIG. 32b is located, FIG. 34b is a sectional structure of the foldable apparatus 10 on a plane on which Q2-Q2 in FIG. 32b is located, and FIG. 34c is a sectional structure of the foldable apparatus 10 on a plane on which Q3-Q3 in FIG. 32b is located.

In FIG. 33a, the surface that is of the first middle frame 1 and that is configured to carry the flexible display 20 keeps aligned with the surface that is of the second middle frame 2 and that is configured to carry the flexible display 20. The first connection rotating shaft 3215 is mounted between the first base 32131 and the second base 32132 and rotatable around the fifth axis L5, and the second connection rotating shaft 313 is mounted between the first base 32131 and the second base 32132 and rotatable around the first axis L1. The first connection rotating shaft 3215 and the second connection rotating shaft 313 are disposed in parallel in the first direction and are meshed via gears. The foldable structure 3 has a small size in a second direction, so that when the foldable structure 3 is in the unfolded state shown in FIG. 33a, the foldable structure 3 has a small thickness. The second direction here is perpendicular to the first direction. The first support plate 311 rotatably fits the first base 32131 and the second base 32132 via the second connection rotating shaft 313. In FIG. 33b, the drive connecting rod 322 is hinged to the connection plate 3214 and rotatable around the second axis L2, and the drive sliding block 323 is hinged to the drive connecting rod 322 and rotatable around the third axis L3. In FIG. 33c, the middle frame sliding block 21 slidably fits the middle frame sliding groove P2. When the first support plate 311 rotates clockwise around the first axis L1, the drive connecting rod 322 rotates clockwise around the second axis L2, and the drive sliding block 323 rotates clockwise around the third axis L3. In addition, the drive sliding block 323 slides in the drive sliding groove P1 in the direction close to the first middle frame 1. The drive sliding block 323 drives the stroke amplification gear 331 to slide in the direction close to the first middle frame 1, and the stroke amplification gear 331 rotates around the fourth axis L4. With reference to FIG. 32b, the stroke amplification gear 331 drives the middle frame sliding block 21 to slide in the direction close to the first middle frame 1 in the middle frame sliding groove P2.

When the first support plate 311 rotates clockwise by 180° around the first axis L1, structures shown in FIG. 34a to FIG. 34c may be obtained. The surface that is of the second middle frame 2 and that is configured to carry the flexible display 20 is parallel to the surface that is of the first middle frame 1 and that is configured to carry the flexible display 20. In FIG. 34a, the first connection rotating shaft 3215 and the second connection rotating shaft 313 are disposed in parallel in the second direction and are meshed via the gears, and the foldable structure 3 has a small size in the first direction. The second middle frame 2 rotates by 180° relative to the first middle frame 1, and the second middle frame 2 approaches the first axis L1 and generates the second displacement H2. Further, refer to a side view of the foldable apparatus 10 shown in FIG. 24a in the unfolded state shown in FIG. 35. Compared with the foldable apparatus 10 shown in FIG. 4b, in the unfolded state of the foldable apparatus 10, the foldable structure 3 shown in FIG. 35 has a smaller thickness in the second direction. This helps adapt to a current development trend of the miniaturization of the device.

The descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A foldable apparatus (10), comprising a first middle frame (1), a second middle frame (2), and a foldable structure (3) disposed between the first middle frame (1) and the second middle frame (2), wherein the foldable structure (3) comprises a support plate mechanism (31), a hinge mechanism (32), and a stroke control mechanism (33);
the hinge mechanism (32) comprises a fastening component (321), a drive connecting rod (322), and a drive sliding block (323); the fastening component (321) is fastened to the first middle frame (1); a first end of the drive connecting rod (322) is mounted on the fastening component (321) and rotatable around a second axis (L2); and the drive sliding block (323) is mounted at a second end of the drive connecting rod (322) and rotatable around a third axis (L3);
the support plate mechanism (31) is mounted on the fastening component (321) and rotatable around a first axis (L1), and the support plate mechanism (31) is movable in a first direction to slidably fit the second middle frame (2); the drive sliding block (323) is movable in the first direction to slidably fit the support plate mechanism (31); the first direction is perpendicular to the first axis (L1); and the first axis (L1), the second axis (L2), and the third axis (L3) are parallel to each other and not collinear; and
the stroke control mechanism (33) is mounted on the drive sliding block (323) and rotatable around a fourth axis (L4), the stroke control mechanism (33) is in transmission connection between the support plate mechanism (31) and the second middle frame (2), and the fourth axis (L4) is perpendicular to the first axis (L1); and when the support plate mechanism (31) rotates around the first axis (L1) relative to the first middle frame (1), the drive sliding block (323) moves in the first direction relative to the support plate mechanism (31) to generate first displacement (H1), and the stroke control mechanism (33) drives the second middle frame (2) to move in the first direction relative to the support plate mechanism (31) to generate second displacement (H2), wherein the second displacement (H2) is greater than the first displacement (H1).

2. The foldable apparatus (10) according to claim 1, wherein the fastening component (321) comprises a connecting rod base (3211) and a fastening shaft (3212);
a first end of the fastening shaft (3212) is fastened to the first middle frame (1), and a second end of the fastening shaft (3212) is fastened to the connecting rod base (3211); and an axis of the fastening shaft (3212) is collinear with the first axis (L1); and
the support plate mechanism (31) is rotatably connected to the fastening shaft (3212) and rotatable around the first axis (L1), and the drive connecting rod (322) is mounted on the connecting rod base (3211) and rotatable around the second axis (L2).

3. The foldable apparatus (10) according to claim 2, wherein a first stop hole (f1) is disposed on the connecting rod base (3211), a second stop hole (f2) is disposed on the fastening shaft (3212), and the first stop hole (f1) and the second stop hole (f2) are connected via a stop pin (F).

4. The foldable apparatus (10) according to any one of claims 1 to 3, wherein a damping component (324) is disposed between the support plate mechanism (31) and the fastening component (321), and the damping component (324) comprises a damping spring (3241) and a damping sliding block (3242);
the damping sliding block (3242) is clamped to the support plate mechanism (31) and movable in an extension direction of the first axis (L1), and the damping sliding block (3242) and the fastening component (321) are cam-fitted; and when the damping sliding block (3242) rotates around the first axis (L1), the damping sliding block (3242) is movable in the extension direction of the first axis (L1); and
the damping spring (3241) is disposed between the damping sliding block (3242) and the fastening component (321), to provide restoring force for the damping sliding block (3242) when the damping sliding block (3242) moves in the extension direction of the first axis (L1) and compresses the damping spring (3241).

5. The foldable apparatus (10) according to claim 4, wherein a cam surface (j1) is disposed on the damping sliding block (3242), a wave-shaped surface (j2) is disposed on the fastening component (321), and the cam surface (j1) abuts against the wave-shaped surface (j2).

6. The foldable apparatus (10) according to claim 4 or 5, wherein a protrusion part (k1) is disposed on the damping sliding block (3242), and a groove part (k2) parallel to the first axis (L1) is disposed on the support plate mechanism (31), wherein the protrusion part (k1) slidably fits the groove part (k2).

7. The foldable apparatus (10) according to claim 1, wherein the fastening component (321) comprises a connection substrate (3213), a connection plate (3214), and a first connection rotating shaft (3215), and the connection substrate (3213) is located between the first middle frame (1) and the second middle frame (2);
the connection plate (3214) is fastened to the first middle frame (1) and is fastened to the first connection rotating shaft (3215), and the drive connecting rod (322) is mounted on the connection plate (3214) and rotatable around the second axis (L2);
the first connection rotating shaft (3215) is mounted on the connection substrate (3213) and rotatable around a fifth axis (L5), and the fifth axis (L5) is parallel to the first axis (L1); and
the support plate mechanism (31) has a second connection rotating shaft (313), and the second connection rotating shaft (313) is rotatably connected to the connection substrate (3213) and rotatable around the first axis (L1).

8. The foldable apparatus (10) according to claim 7, wherein the first connection rotating shaft (3215) and the second connection rotating shaft (313) are disposed side by side in the first direction, a first meshing tooth (41) is disposed on an outer periphery that is of the first connection rotating shaft (3215) and that faces the second connection rotating shaft (313), a second meshing tooth (42) is disposed on an outer peripheral surface that is of the second connection rotating shaft (313) and that faces the first connection rotating shaft (3215), and the first meshing tooth (41) is meshed with the second meshing tooth (42).

9. The foldable apparatus (10) according to claim 8, wherein a first damping unit (325) is disposed between the first connection rotating shaft (3215) and the connection substrate (3213), and a second damping unit (326) is disposed between the second connection rotating shaft (313) and the connection substrate (3213);
the first damping unit (325) comprises a first spring (3251) and a first sliding block (3252), the first sliding block (3252) is mounted on the connection substrate (3213) and movable in an extension direction of the fifth axis (L5), and the first sliding block (3252) and the first connection rotating shaft (3215) are cam-fitted; when the first connection rotating shaft (3215) rotates around the fifth axis (L5), the first sliding block (3252) is movable in the extension direction of the fifth axis (L5); and the first spring (3251) is disposed between the first sliding block (3252) and the connection substrate (3213), to provide restoring force for the first sliding block (3252) when the first sliding block (3252) moves in the extension direction of the fifth axis (L1) and compresses the first spring (3251); and
the second damping unit (326) comprises a second spring (3261) and a second sliding block (3262), the second sliding block (3262) is mounted on the connection substrate (3213) and movable in an extension direction of the first axis (L1), and the second sliding block (3262) and the second connection rotating shaft (313) are cam-fitted; when the second connection rotating shaft (313) rotates around the first axis (L1), the second sliding block (3262) is movable in the extension direction of the first axis (L1); and the second spring (3261) is disposed between the second sliding block (3262) and the connection substrate (3213), to provide restoring force for the second sliding block (3262) when the second sliding block (3262) moves in the extension direction of the first axis (L1) and compresses the second spring (3261).

10. The foldable apparatus (10) according to claim 9, wherein the first sliding block (3252) and the second sliding block (3262) are of an integrated structure.

11. The foldable apparatus (10) according to claim 9 or 10, wherein the first spring (3251) and the second spring (3261) are fastened to the connection substrate (3213) via a fastening member (6).

12. The foldable apparatus (10) according to any one of claims 7 to 11, wherein the connection plate (3214) is connected to two first connection rotating shafts (3215), and in the extension direction of the first axis (L1), the two first connection rotating shafts (3215) are symmetrical with each other relative to the connection plate (3214).

13. The foldable apparatus (10) according to any one of claims 7 to 12, further comprising a first central shaft (51) and a second central shaft (52) that are fastened to the connection substrate (3213), wherein an axis of the first central shaft (51) is collinear with the fifth axis (L5), and an axis of the second central shaft (52) is collinear with the first axis (L1); and
the first connection rotating shaft (3215) is rotatable around the fifth axis (L5) to rotatably fit the first central shaft (51), and the second connection rotating shaft (313) is rotatable around the first axis (L1) to rotatably fit the second central shaft (52).

14. The foldable apparatus (10) according to any one of claims 1 to 13, wherein at least one first pin hole (g1) is disposed on the fastening component (321), and an axis of any first pin hole (gl) is collinear with the second axis (L2); and
at least one second pin hole (g2) is disposed at the first end of the drive connecting rod (322), and the at least one second pin hole (g2) is connected to the at least one second pin hole (g2) via a first pin shaft (d).

15. The foldable apparatus (10) according to any one of claims 1 to 14, wherein at least one second pin shaft (h1) is disposed at the second end of the drive connecting rod (322), and an axis of any second pin shaft (hl) is collinear with the third axis (L3); and
at least one third pin hole (h2) is disposed on the drive sliding block (323), and the at least one second pin shaft (h1) rotatably fits the at least one third pin hole (h2).

16. The foldable apparatus (10) according to any one of claims 1 to 15, wherein the support plate mechanism (31) comprises a first support plate (311) and a second support plate (312), the first support plate (311) is mounted on the fastening component (321) and rotatable around the first axis (L1), and the second support plate (312) is fastened to the first support plate (311); and
a drive sliding groove (P1) that slidably fits the drive sliding block (323) is disposed on the first support plate (311), and a middle frame sliding groove (P2) that slidably fits the second middle frame (2) is disposed on the first support plate (311).

17. The foldable apparatus (10) according to any one of claims 1 to 16, wherein the stroke control mechanism (33) comprises a stroke amplification gear (331), and the stroke amplification gear (331) is mounted on the drive sliding block (323) and rotatable around the fourth axis (L4); and
a first transmission end (R1) and a second transmission end (R2) are disposed opposite to each other at an edge of the stroke amplification gear (331); the first transmission end (R1) is configured to connect to the support plate mechanism (31), and the second transmission end (R2) is configured to connect to the second middle frame (2); and a distance between the first transmission end (R1) and the fourth axis (L4) is less than a distance between the second transmission end (R2) and the fourth axis (L4).

18. The foldable apparatus (10) according to claim 17, wherein the first transmission end (R1) is a first tooth part (3311), and the second transmission end (R2) is a first sliding rod (3312);
a first rack (3111) is disposed on the support plate mechanism (31), and the first tooth part (3311) is meshed with the first rack (3111); and
a first sliding groove (211) is disposed on the second middle frame (2), and the first sliding rod (3312) slidably fits the first sliding groove (211).

19. The foldable apparatus (10) according to claim 17, wherein the first transmission end (R1) is a second tooth part (3313), and the second transmission end (R2) is a third tooth part (3314);
a second rack (3112) is disposed on the support plate mechanism (31), and the second tooth part (3313) is meshed with the second rack (3112); and
a third rack (212) is disposed on the second middle frame (2), and the third tooth part (3314) is meshed with the third rack (212).

20. The foldable apparatus (10) according to claim 17, wherein the first transmission end (R1) is a second sliding groove (3315), and the second transmission end (R2) is a fourth tooth part (3316);
a second sliding rod (3113) is disposed on the support plate mechanism (31), and the second sliding rod (3113) slidably fits the second sliding groove (3315); and
a fourth rack (213) is disposed on the second middle frame (2), and the fourth tooth part (3316) is meshed with the fourth rack (213).

21. The foldable apparatus (10) according to any one of claims 1 to 16, wherein the stroke control mechanism (33) comprises a stroke amplification lever (332); the stroke amplification lever (332) has a first end part (3321), a second end part (3322), and a middle part (3323) located between the first end part (3321) and the second end part (3322); a first lever sliding groove (Y1) is disposed at the middle part (3323), and a second lever sliding groove (Y2) is disposed at the second end part (3322); and a drive sliding part (3231) that rotatably and slidably fits the first lever sliding groove (Y1) is disposed on the drive sliding block (323), wherein
the first end part (3321) is hinged to the support plate mechanism (31), and a middle frame sliding part (214) that rotatably and slidably fits the second lever sliding groove (Y2) is disposed on the second middle frame (2); or
the first end part (3321) is hinged to the second middle frame (2), and a support sliding part (3114) that rotatably and slidably fits the second lever sliding groove (Y2) is disposed on the support plate mechanism (31).

22. The foldable apparatus (10) according to any one of claims 1 to 21, wherein the first middle frame (1) has a first surface (m1) and a second surface (m2) that are opposite to each other, and the first surface (m1) is configured to carry a flexible display (20); and
the first axis (L1) is located on one side of the second surface (m2), an accommodating groove (Z) is formed on the second surface (m2), and the accommodating groove (Z) is configured to accommodate the second middle frame (2).

23. The foldable apparatus (10) according to any one of claims 1 to 22, wherein two foldable structures (3) are disposed between the first middle frame (1) and the second middle frame (2) in the extension direction of the first axis (L1).

24. A terminal device (100), comprising a flexible display (20) and the foldable apparatus (10) according to any one of claims 1 to 23, wherein
the flexible display (20) has a first fastening area (X1), a second fastening area (X3), and a bending area (X2) located between the first fastening area (X1) and the second fastening area (X3); and the first fastening area (X1) is fastened to the first middle frame (1), and the second fastening area (X3) is fastened to the second middle frame (2).
